# EUROPEAN PATENT SPECIFICATION

(11) **EP 1 897 051 B1**
(45) Date of publication and mention of the grant of the patent: **31.07.2019**
(21) Application number: 05818903.6
(22) Date of filing: 29.09.2005
(51) Int. Cl.: G06Q 20/04, G06Q 20/40, G06Q 30/06

(54) **METHOD AND SYSTEM FOR IDENTIFYING USERS AND DETECTING FRAUD BY USE OF THE INTERNET**
VERFAHREN UND SYSTEM ZUM IDENTIFIZIEREN VON BENUTZERN UND ZUM ERKENNEN VON BETRUG DURCH VERWENDUNG DES INTERNETS
PROCEDE ET SYSTEME DESTINES A L'IDENTIFICATION D'UTILISATEURS ET A LA DETECTION DE FRAUDES DANS L'UTILISATION D'INTERNET

(30) Priority: 27.06.2005 US 694768 P
(43) Date of publication of application: 12.03.2008
(73) Proprietor: The 41st Parameter, Inc., Scottsdale, AZ 85254 (US)
(72) Inventor: EISEN, Ori, Scottsdale, AZ 85254-2568 (US)
(74) Representative: D Young & Co LLP
(86) International application number: PCT/US2005/035532
(87) International publication number: WO 2007/001394

(56) References cited:
- EP-A- 0 418 144
- EP-A- 0 923 039
- EP-A- 1 256 911
- WO-A-02/091226
- WO-A-03/025868
- WO-A-03/075197
- WO-A2-01/95550
- US-A1- 2003 076 242
- US-A1- 2004 034 794
- US-A1- 2004 203 750
- US-A1- 2005 033 703
- US-A1- 2005 113 092
- US-A1- 2005 131 826
- MANAVOGLU E. ET AL.: 'Probabilistic user behavior models' DATA MINING, 2003. ICDM 2003. THIRD IEEE INTERNATIONAL CONFERENCE, [Online] 19 November 2003 - 22 November 2003, pages 203 - 210, XP010672734 Retrieved from the Internet: <URL:http://www.cs.ust.hk/~qyang/537/Papers /manavoglue_usermodels.pdf>

## Description

### BACKGROUND OF THE INVENTION

The invention relates to Internet purchasing or e-tail transactions and specifically to detecting fraud in such transactions when ordering products, services, or downloading information over the Internet.

There is a continuing need to develop techniques, devices, and programs to detect and prevent Internet fraud. The invention provides a method and a system for detecting and preventing Internet fraud by utilizing and analyzing a number of parameters to uniquely identify a customer and a potential fraudulent Internet-based transaction.

### DESCRIPTION OF THE PRIOR ART

US 2005/0131826 discloses a system and method for authorizing certain aspects of network based transactions between a customer and a merchant.

Many methods and systems have been developed over the years to prevent or detect Internet fraud. Today, to gain consumer confidence and prevent revenue loss, a website operator or merchant desires an accurate and trustworthy way of detecting possible Internet fraud. Merely asking for the user name, address, phone number, and e-mail address will not suffice to detect and determine a probable fraudulent transaction because such information can be altered, manipulated, fraudulently obtained, or simply false.

Typically, an Internet user who accesses a website for obtaining a service, product, or information, not only enters personal information as mentioned above, but is also requested to provide a credit card account number, expiration date, and billing address. An online criminal seeking to obtain goods, services, or access to information (text and/or visuals over the Internet) commonly uses someone else's credit card information to obtain the services or products during the transaction. To prevent such occurrences, websites, via credit card companies and banks, often check to see if the address on the order corresponds or matches the address for the credit card owner. Although billing and shipping addresses can differ, such as when someone purchases a gift for another, it is a factor to consider in the verification process. Additionally, merchants utilize phone number matching between that of the Internet order and the credit card company database. Another commonly used technique for order verification is e-mail address verification where the website operator sends a message to the user e-mail address asking the customer to confirm the order prior to executing the same. Yet, online thieves frequently use e mail addresses from large portal sites that offer free e-mail accounts. These e-mail addresses are easily disposable and make it harder for the website operator to identify the fraudulent customer before executing the transaction.

More sophisticated websites now capture a variety of parameters from the user known as Common Gateway Interface parameters (CGI parameters). These parameters commonly include non-personal information such as a user Internet Protocol Address (IP Address). Every computer connected to the Internet is assigned a unique number known as its Internet Protocol (IP) Address. Much like a phone number in a home or office, an IP address can be used to identify the specific user or at least the particular computer used for an Internet transaction. In addition, since these numbers are usually assigned in country-based blocks, an IP address can often be used to identify the country from which a computer is connected to the Internet. Yet, IP addresses can change regularly if a user connects to the Internet via a dial-up connection or reboots their computer. Online thieves also have ways of scrambling their IP addresses or adopting another IP address to make it nearly impossible for the website operator to identify the true user. Thus, websites typically use an IP address plus a further non-personal identifier such as a Browser ID (or user agent), a cookie, and/or a registration ID to try to identify a unique user and to prevent fraud in a second transaction.

A Browser ID provides the website operator with a wealth of information about the user such as the software being used to browse or surf the Internet. Additionally, the Browser ID includes information about the user computer operating system, its current version, its Internet browser and the language. Thus, the Browser ID has valuable information for identifying a unique user. The Browser ID may also have more detailed information such as the type of content the user can receive; for example, this lets the website operator know if the user can run applications in FLASH-animation, open a PDF-file, or access a Microsoft Excel document. Yet, Browser IDs from different computers can be similar, as there are so many Internet users and thus many have similar computers with the same capabilities, programs, web browsers, operating systems, and other information. A cookie refers to a piece of information sent from the web server to the user web browser which is saved on the resident browser software. Cookies might contain specific information such as login or registration information, online 'shopping cart' information, user preferences, etc. But cookies can easily be deleted by the computer user, by the browser, or turned off completely so that the server cannot save information on the browser software. Thus, cookies alone cannot serve as a unique identifier to thwart an Internet thief.

Accordingly, what is needed is a method and system that overcomes the problems associated with a typical verification and fraud prevention system for Internet transactions particularly in the purchasing of services, products, or information by uniquely identifying each consumer. Then, when that consumer seeks a second fraudulent purchase, the website operator will detect the same and block the order or, at least, obtain more information to ensure the order is legitimate. The system should be easily implemented within the existing environment and should be adaptable and compatible with existing technology.

### SUMMARY OF THE INVENTION

The invention is defined in the claims.

A method and system is provided for detecting potentially fraudulent transactions over the Internet. The method and system comprises obtaining information relating to the transaction from the consumer and combining this information with a unit corresponding to the change of time, a delta of time parameter, to create a unique computer identifier. If a future transaction involves an identical computer identifier, as described below, which was previously engaged in a fraudulent transaction, the website operator can choose to cancel the transaction, pursue legal action, seek further verification, or the like. By using information relating to the first transaction, such as the IP address and/or Browser ID, and combining it with the delta of time parameter, as detailed herein, the website host can more accurately preventively track fraudulent users online by comparing computer identifiers to each other. In so doing, an integrated fraud prevention system is provided which allows the website host, merchant, or the like, to accurately and efficiently determine the validity or fraudulent quality of a transaction sought to be transacted over the Internet.

Accordingly, an embodiment of the invention provides a method and system for improving fraud detection in connection with Internet transactions. Various embodiments utilize existing technological capabilities to prevent online thieves from making second fraudulent transactions.

An embodiment can provide a method and system for detecting and preventing Internet fraud committed as a result of "scams" or deceptive practices developed to acquire personal, confidential and/or financial information. The concepts of the invention described above may be characterized as "fingerprinting" techniques and methods to identify and/or prevent fraud involving information obtained through Internet scams. These unlawful practices will likely continue as new techniques are developed in addition to schemes already known to those in field today such as phishing, pharming, spoofing, session cloning and other deceptive practices. It shall be understood that the clock based or delta of time parameters provided herein can be used within the scope of the invention either alone or together with other known or future developed fraud parameters in the fight against online fraud and Internet scams. The various methods and systems provided in accordance with the invention offer improved and enhanced fraud detection and/or prevention solutions for e-commerce and Internet based transactions. These solutions provide a degree of invisibility to users and fraudsters alike and do not require any or all of the following: user interaction (less likelihood for mistakes or carelessness), opt-in (no adoption issues and full coverage of anti-fraud measures can be provided), change in customer behavior (no confusion as to what actions need be taken or avoided), downloads or cookies (no compatibility issues with user computers or browsers). Moreover, these Internet based solutions generate low false-positives and false negatives so as to minimize loss of business for mistakenly turning down legitimate transactions and successfully rejecting transactions that are fraudulent. The invention can incorporate a type of link analysis on user information from compromised accounts to identify a fraudster and/or the computer used to conduct fraudulent transactions online.

Further aspects of the subject matter are described in the following numbered clauses:
1. A method for identifying a computer comprising the steps of:
   obtaining selected information about the computer during an online connection including a local time according to a resident computer clock and at least one non-personal identification parameter;
   measuring a local server time from a website server clock;
   calculating a delta of time parameter based upon a difference in time between the local server time and the local time according to the resident computer clock; and
   generating a computer identifier to identify the computer that is derived from the delta of time parameter in combination with at least one non-personal identification parameter related to the computer.
2. The method as recited in clause 1 further comprising the step of:
   obtaining additional identification parameters including personal identification information from the selected information.
3. The method as recited in clause 2, wherein the personal identification information includes consumer identification information.
4. The method as recited in clause 3, wherein the consumer identification information includes at least one of the following: consumer name, address, billing information, shipping information, telephone number and e-mail address.
5. The method as recited in clause 1, wherein the non-personal identification parameter is computer identification information.
6. The method as recited in clause 5, wherein the computer identification information includes an Internet parameter.
7. The method as recited in clause 6, wherein the Internet parameter is a CGI parameter.
8. The method as recited in clause 7, wherein the CGI parameter includes at lease one of the following: IP address, and Browser ID.
9. The method as recited in clause 1 further comprising the step of:
   capturing relevant time zone information in which the computer is physically located from the selected information about the computer.
10. The method as recited in clause 9, wherein the relevant time zone information is for one or more future dates to indicate whether DST is observed in the relevant time zone.
11. A method for detecting fraud in an online transaction with a customer comprising the steps of:
   creating a first computer identifier in the course of a first online transaction, and a second computer identifier in the course of a second online transaction, wherein each computer identifier includes a delta of time parameter defined by a time difference measured as between a first clock measurement and a second clock measurement;
   selecting a matching parameter with a value that is based upon a comparison of the first computer identifier and the second computer identifier;
   defining a matching value against which any differences between the first computer identifier and the second computer identifier are measured; and
   assessing the risk of fraud based upon the value of the matching parameter relative to the matching value in connection with the second online transaction when the first online transaction is known to be associated with fraudulent activity.
12. The method as recited in clause 11 wherein the first clock measurement is based upon a customer computer clock, and the second clock measurement is based upon a merchant web server clock, and wherein the clock measurements are derived from timestamp information associated with data packets transmitted across a network.
13. The method as recited in clause 11 wherein the value of the matching parameter is different than the matching value indicating the second online transaction may be fraudulent.
14. The method as recited in clause 11 further comprising the step of:
   communicating to a website operator that the second online transaction is fraudulent, not fraudulent, or requires further case analysis.
15. The method in clause 14 further comprising the step of:
   blocking the second online transaction based upon the value of the matching parameter.
16. The method as recited in clause 11 wherein the value of the matching parameter is the same as the matching value indicating the second online transaction is not likely fraudulent.
17. The method as recited in clause 11 wherein the matching parameter may fall within a defined range communicating to the customer the status of the second online transaction based upon the value of the matching parameter.
18. The method in clause 11, wherein the delta of time parameter is stated as a range of time measured in seconds or milliseconds.
19. The method of clause 11 wherein the personal or non-personal identification parameter is a Browser ID.
20. A computer readable medium containing program instructions for creating a computer identifier in the course of an online transaction comprising the steps of:
   receiving, from an online customer computer, at least one of either a personal or non-personal identification parameter;
   capturing, from the clock of the customer computer, the computer local time;
   capturing, from the clock of the website server computer, the server computer local time;
   calculating and storing a delta of time parameter based upon the difference between the customer computer local time and the server computer local time, wherein calculating the delta of time parameter is performed at the time of the online transaction; and
   identifying a customer based upon customer identification data comprising the delta of time parameter and the personal or non-personal identification parameter.
21. A fingerprinting method to identify a computer comprising the steps of:
   creating a first computer identifier in the course of a first online transaction, and a second computer identifier in the course of a second online transaction, wherein each computer identifier includes a delta of time parameter defined by a time difference measured between a first clock measurement and a second clock measurement over a selected time interval;
   comparing the first computer identifier and the second computer identifier;
   generating a matching parameter having a value based upon any measured difference between the first computer identifier and the second computer identifier; and
   identifying the computer with a selected level of certainty upon a comparison of the calculated value of the matching parameter with a defined matching value to indicate whether the computer was involved in both the first online transaction and the second online transaction.
22. The method as recited in clause 21, wherein the first clock measurement and the second clock measurement are each a measured amount of time to travel from the computer to a web site server according to a timestamped packet of data that is transmitted during the first and second online transaction respectively.
23. The method as recited in clause 21, wherein the selected time interval is a measured time between when a first timestamped packet of data and a second timestamped packet of data are sent by the computer, and wherein each include TCP timestamp information.
24. The method as recited in clause 21, wherein the delta of time parameter is a clock skew for the computer.
25. A computer readable medium comprising a computer program to perform a method as recited in clause 21 to identify a computer.

The features and advantages to various aspects of the invention are readily apparent from the following detailed description of the best mode for carrying out the invention when taken in connection with the accompanying chart and other portions of the specification and figures herein.

### BRIEF DESCRIPTION OF THE DRAWINGS

FIG. 1 is a chart that illustrates the versatility and accuracy of the invention in weeding out possible fraudulent online transactions.
FIG. 2 describes a connection between a customer computer and a merchant website server whereby each device maintains respective times according to a resident clock.
FIG. 3 is an index of different Time Zones around the world.
FIG. 4 is a flowchart describing an embodiment of the invention that provides a customer computer identifier.
FIG. 5 describes components of a customer computer identifier provided in accordance with the invention.
FIG. 6 illustrates a comparison of computer identifiers that provides a matching parameter for consideration by an online merchant.
FIG. 7 shows various components and parameters that may comprise a user computer identifier in accordance with an embodiment of the invention.
FIG. 8 depicts the comparison between multiple computer identifiers to provide a matching parameter that can be compared against a preselected matching value.

### DETAILED DESCRIPTION OF THE INVENTION

The present invention relates to a method and system for detecting potentially fraudulent transactions over the Internet. Various modifications to the preferred embodiment will be readily apparent to those skilled in the art and the general principles herein may be applied to other embodiments. The present invention is not intended to be limited to the embodiment shown but is to be accorded the widest scope consistent with the principles and features described herein. It is to be understood that the website, its host, or operator does not have to be a merchant of goods.

The present invention provides a fraud prevention system for online transactions by uniquely identifying a customer based on a number of parameters at least one of which is a delta of time parameter and another of which is another Internet related parameter, preferably the Browser ID of a computer.

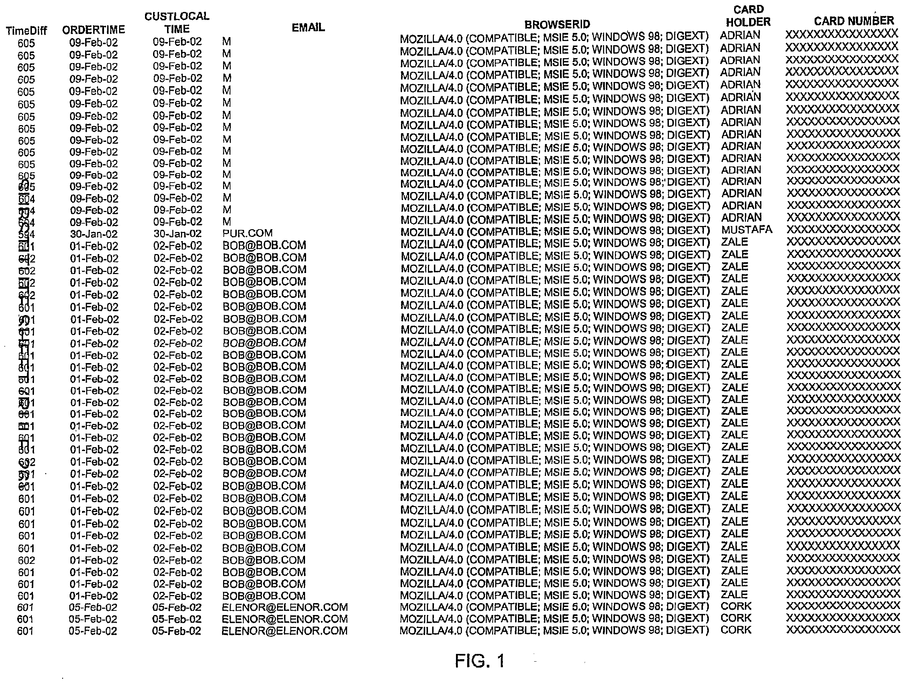

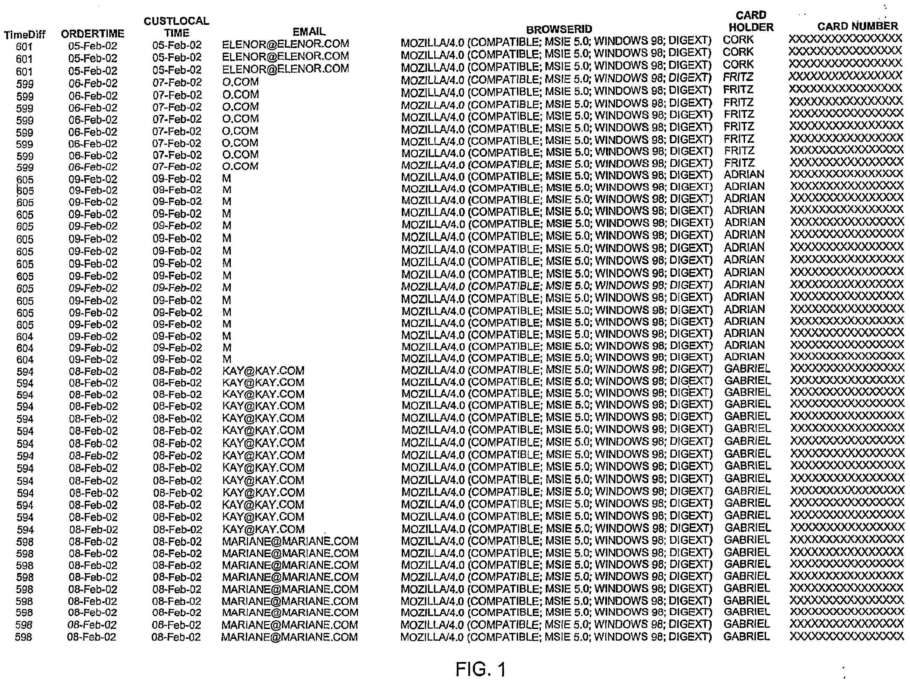

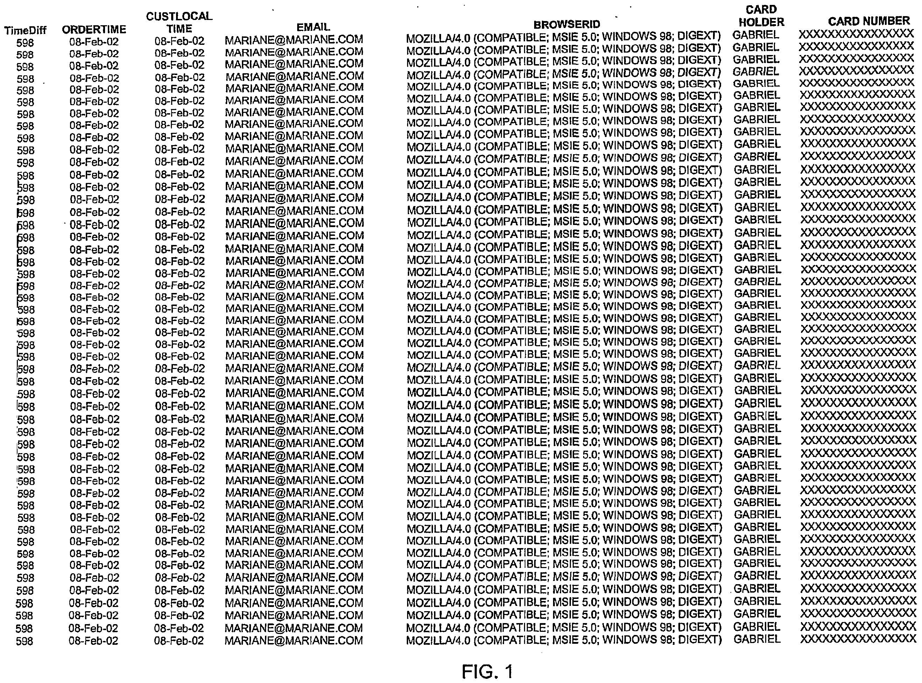

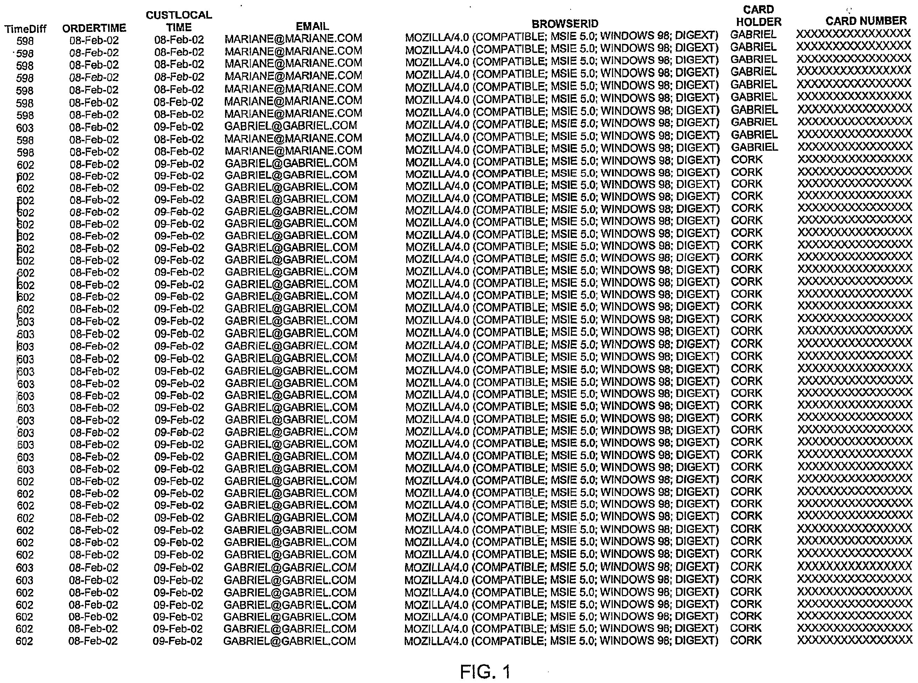

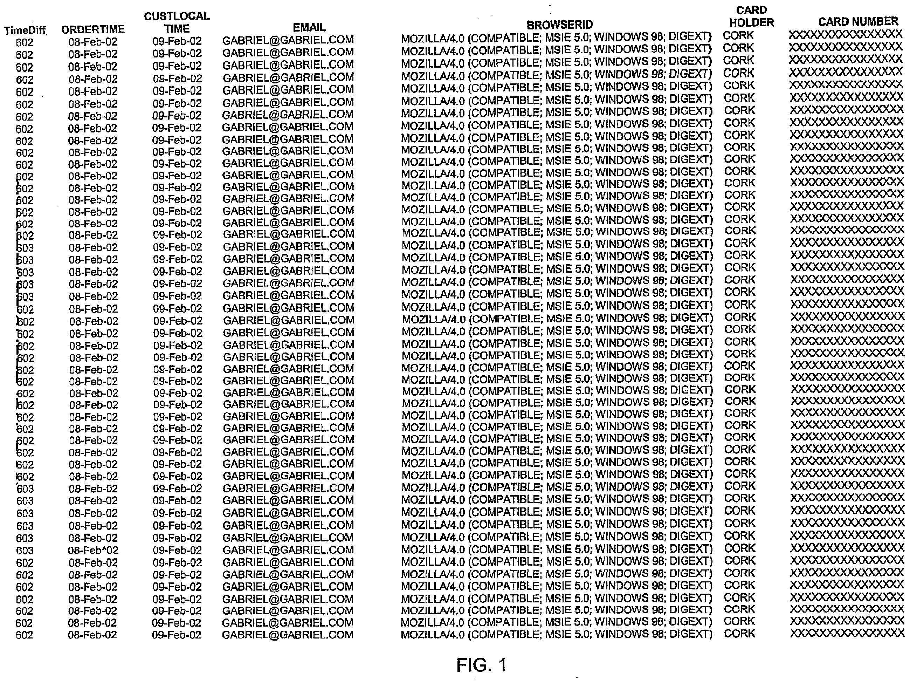

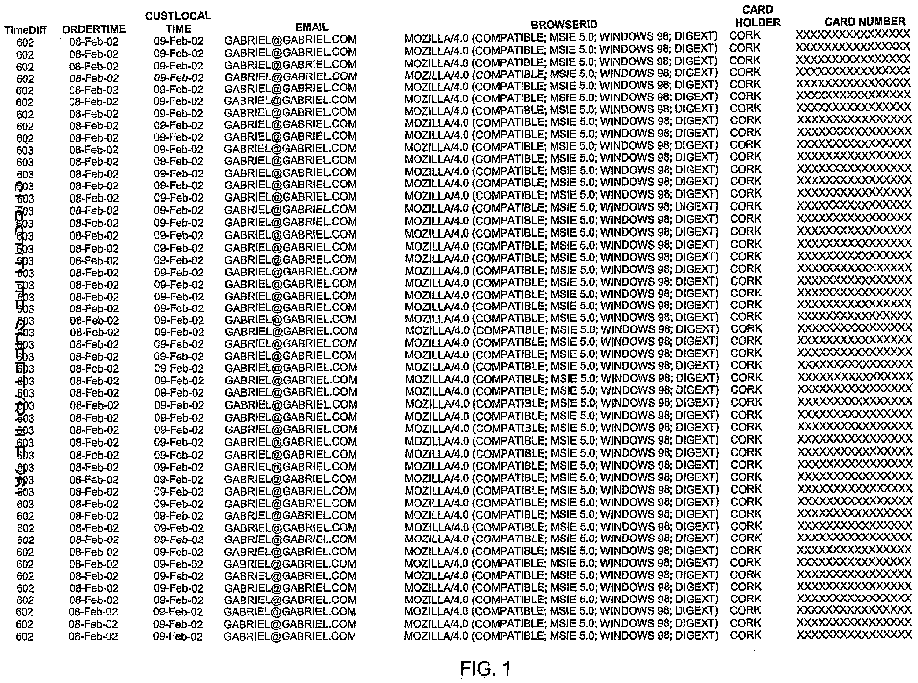

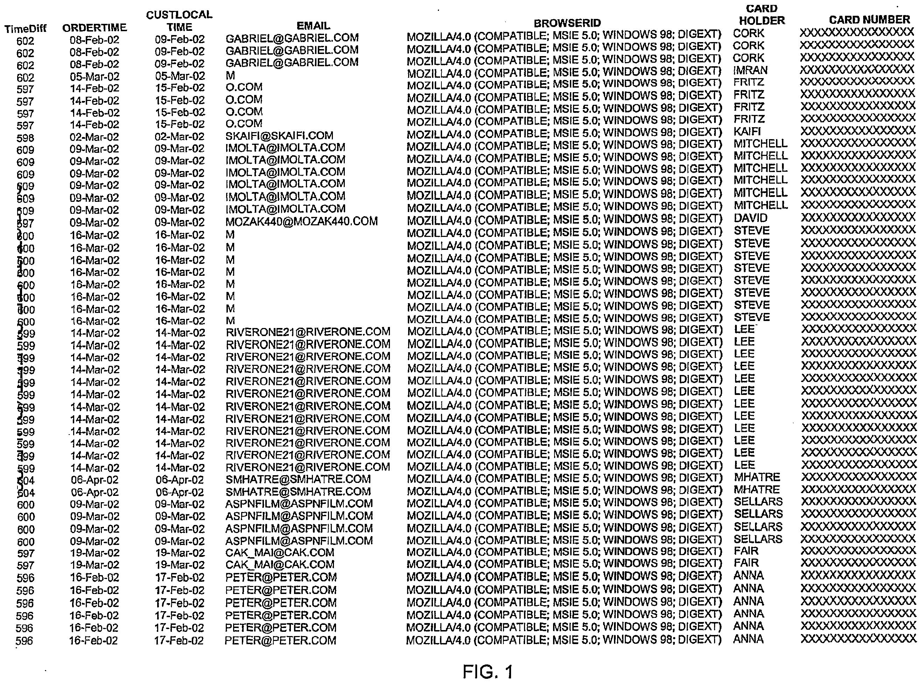

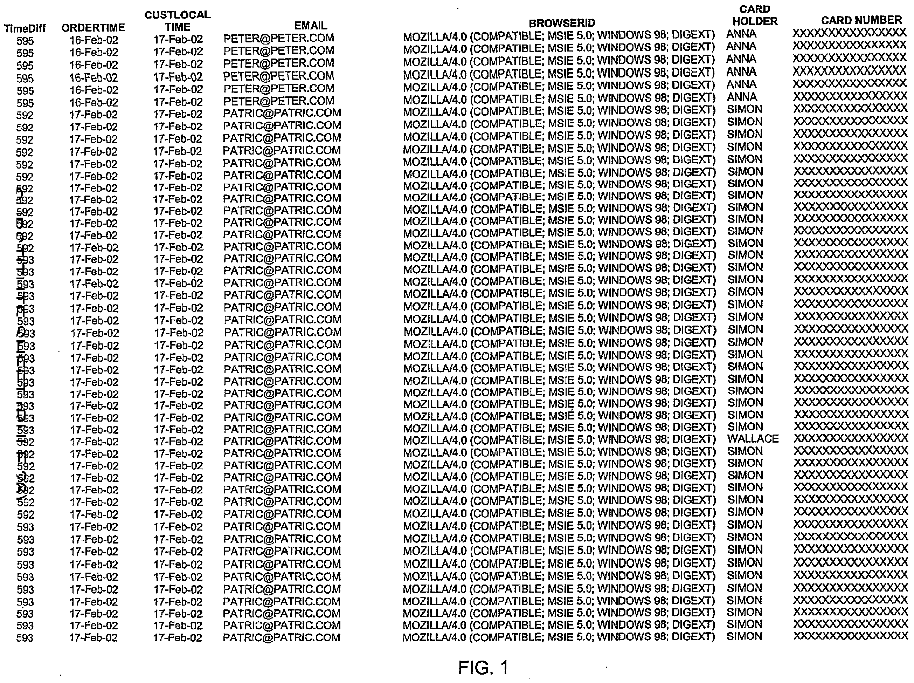

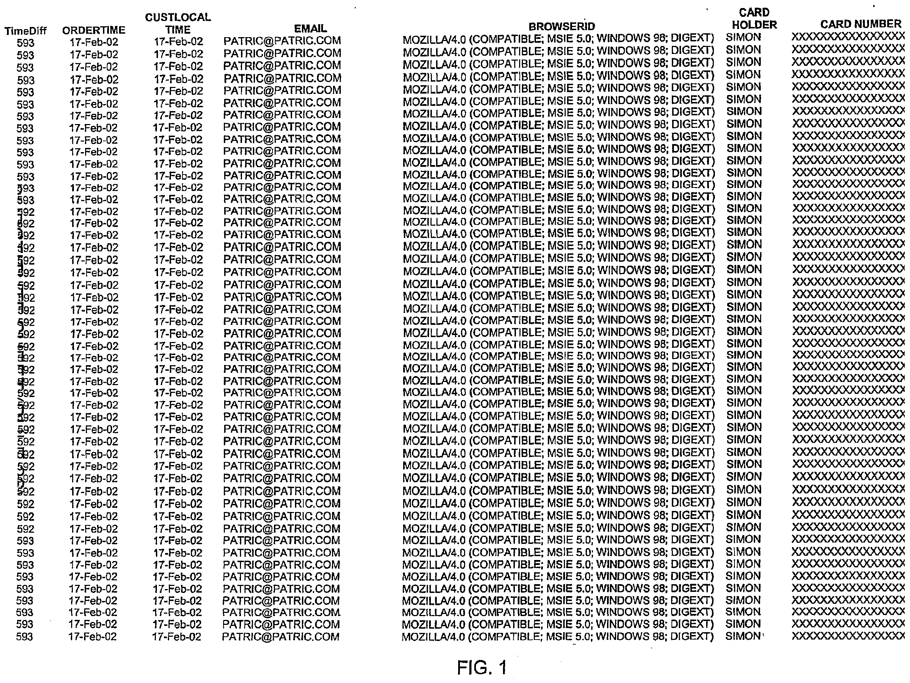

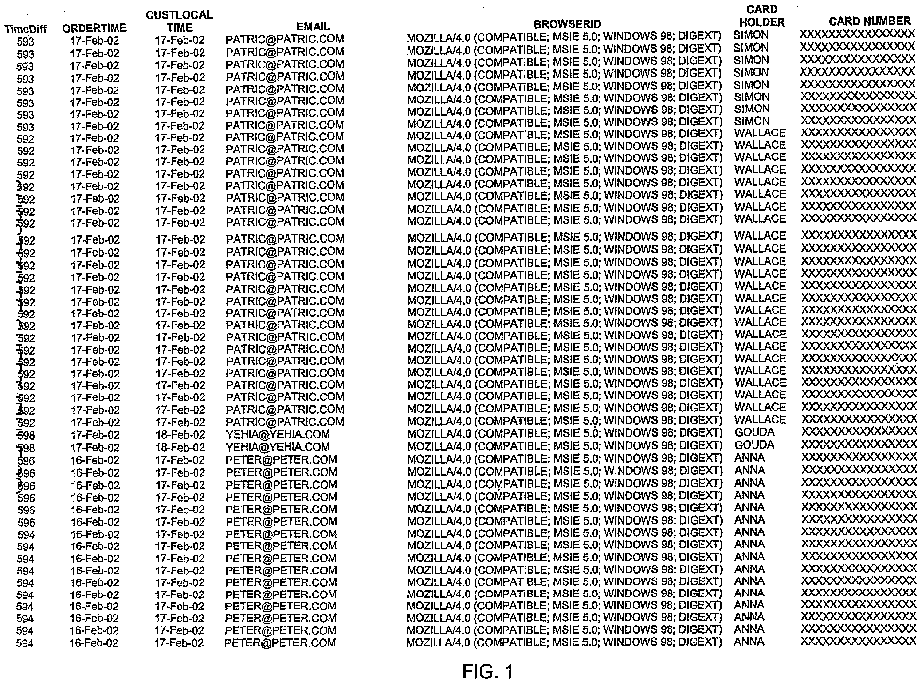

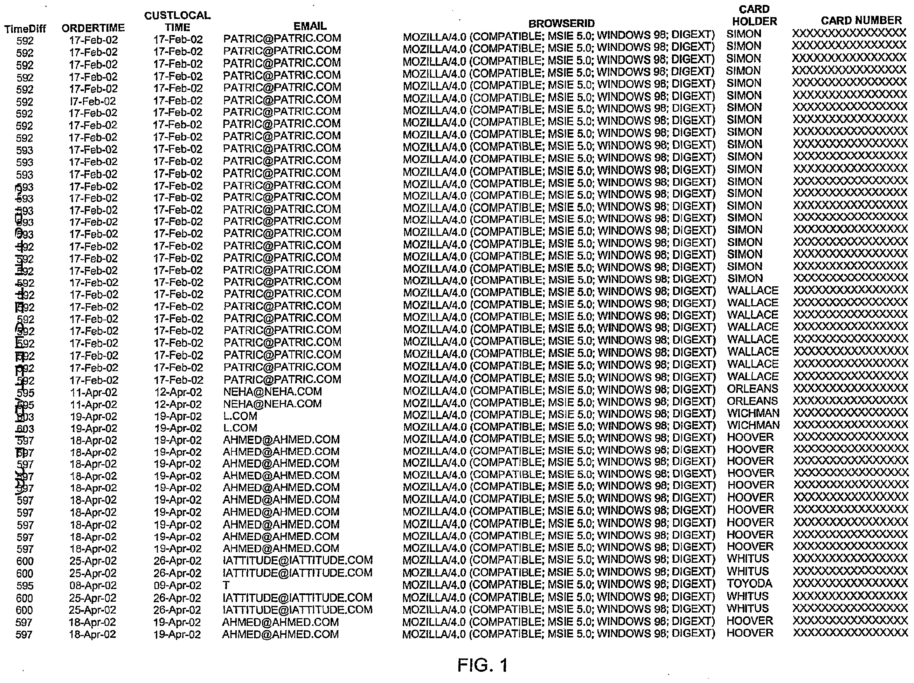

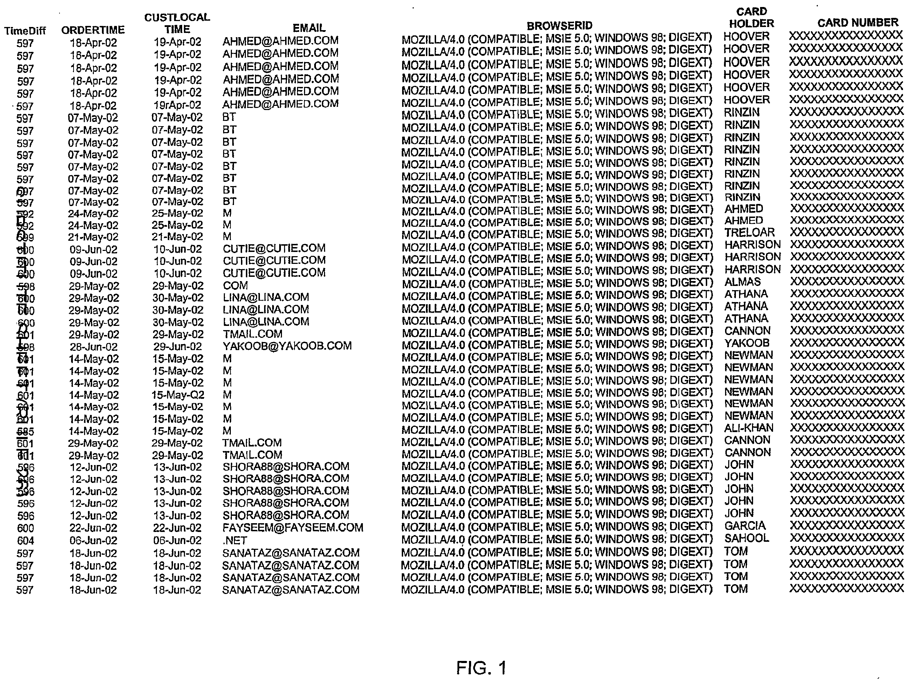

Referring to the chart shown in FIG. 1, what is shown is a series of typical transactions on the Internet between a merchant and several customers. Each customer establishes a connection between his computer and the merchant's website. Upon making this connection, the merchant's website receives some non-personal identification information from the customer. This non-personal information typically includes Common Gateway Interface (CGI) parameters such as the customer's Internet Protocol (IP) Address and the computer's Browser ID. While "hackers" can change, disguise, and/or emulate the IP address to mask a fraudulent transaction, most do not now have the capability nor the idea to do the same for the Browser ID. While some Ahackers@ can change the Browser ID, it is not a trivial tool and if one needs to change it all the time it is not allowing those thieves to easily steal, hence, they are likely to go to a site that does not check Browser IDs. In a typical embodiment, when the customer decides to purchase services, goods, or information from the website, the customer must input additional and more personal information. This personal identification information may commonly include the customer's name, address, billing and shipping information, phone number, and/or e-mail address. A key feature of the present invention is that the website server also captures the local time of the customer's computer, typically through a program such as Javascript, as well as the local time of the server's computer. The server then calculates the time difference (or delta of time) between the customer's computer clock and the server's computer clock. This can be recorded in any desired format such as hours, minutes, seconds, or the like, but corresponds to a delta of time parameter. The delta of time parameter, the non-personal information, including but not limited to the preferred usage of the Browser ID, and/or the personal information are stored by the merchant and used to uniquely identify the customer.

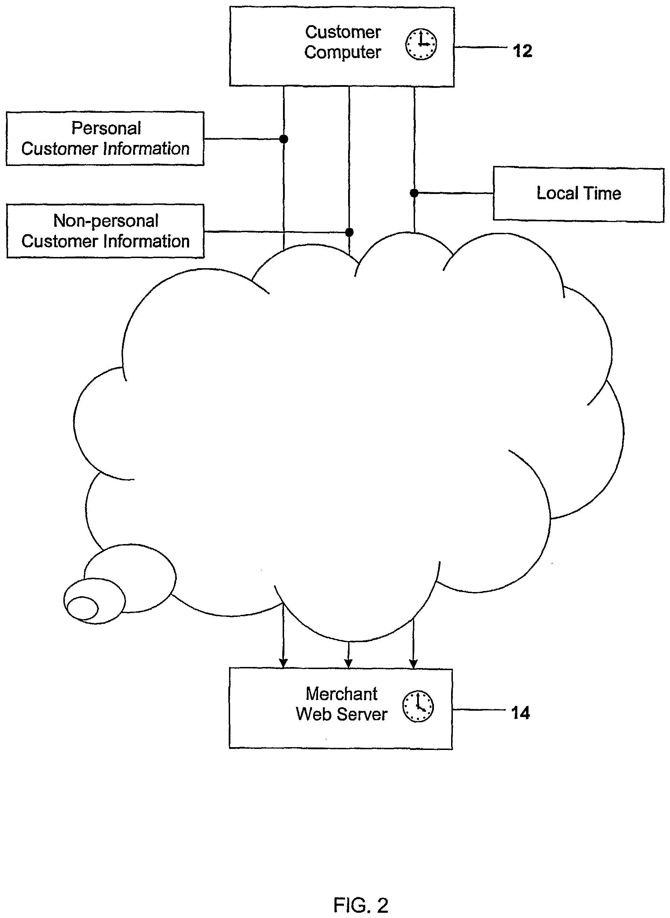

As shown in FIG. 2, a connection may be established between a customer computer 12 and a merchant website server 14. Upon making the online connection, various information is transmitted by the customer computer 12 that may operate as a unique user and/or computer identifier. This information may include personal information specific to the customer, non-personal information corresponding to the customer computer, and the local time according to the customer computer. The merchant website can receive non-personal customer information including CGI parameters such as the customers IP address and computer Browser ID. The customer can further input personal information when making a purchase from the website including a customer name, address, billing and shipping information, phone number, and/or e-mail address(es). In accordance with this embodiment of the invention, the relative customer computer local time according to its resident clock may be captured, typically through a program such as Javascript or any other time indicator employed by telecommunications and networking systems such as timestamps within transmitted data packets (e.g., TCP timestamps in packets within a data stream wherein each packet includes a header portion containing a 32-bit timestamp generated by a originating computer according to local resident time). The local time of a customer computer or client may be captured during any selected moment of action such as when the customer visits or is logging into a merchant site, at the time of a purchase or at times during an exchange of information that can be reflected in timestamp to data packets transmitted across a selected network or the Internet. At the same time, the merchant web server also maintains and measures a relative website server local time according to a resident clock. The time difference or delta of time as between the customer computer clock and the servers computer clock can be therefore calculated. This approach in determining when to measure a time of action or event may be characterized as opportunistic in that measurements are taken at selected moments in time. The delta of time can be measured, calculated and recorded by the merchant web server or any other computer operating with or connected to the merchant online system. The delta of time may be measured in any desired format or increments of time such as hours, minutes, seconds, milliseconds (microseconds) or the like. Over different periods of time, the delta of time parameters are generally persistent with relatively high degree of accuracy. Accordingly, the measured time difference between these computer clocks provides a fraud parameter in accordance with this aspect of the invention that may link or associate a particular customer computer with transactions that may involve fraud.

The delta of time (Time Diff) parameter provided in accordance with this aspect of the invention may function alone or combined with other parameters to provide what may be characterized as a "PC fingerprint." Such devices include personal computers or any other type of computing devices or computers including those from Apple Computer, Inc. (hereinafter collectively PC). Each PC connected to the Internet may be configured slightly different and may possess identifiable characteristics distinguishing it from other devices which can be exploited by the invention. A more accurate PC fingerprint may be generally developed by considering a greater number of available computer related parameters. The Time Diff parameter may serve as part of a PC fingerprint for identifying a device which serves as a distinctive mark or characteristic about a particular user device. In addition to a Time Diff parameter, the flow of information exchanged during an Internet session may be captured and provide significant information about the user device on the other end. This type of information exchange considered by the invention is preferably invisible and transparent to users, and does not rely on user action or modification of online behavior. The Time Diff parameter may thus link incidents involving fraud, hacking, phishing etc. by automatically correlating information such as login data, computer data and customer data. For example, by analyzing data sent from the user device, information about the device and browser used by an individual may be obtained such as a Browser ID, the Browser/device IP address and the particular Browser language. By formulating a more accurate PC fingerprint, there is less likelihood of mistakenly associating a user with a fraudulent transaction (false positive) during e-commerce transactions, or failing to detect a fraudster. Other applications of the invention include national security and law enforcement whereby a computer can be uniquely identified in a manner similar to way thieves can be identified by a physical fingerprint. Accordingly, a PC fingerprint provided by the invention enables the ability to link and connect different online accounts and activity to a same device.

The Time Diff parameter provided in accordance with the invention may be captured or measured during various selected moments of action during an Internet session such as the login step or procedure. Today it is estimated that medium to large e-commerce merchants and financial institutions receive over 5,000 orders per day for digital and shipped goods, and over 100,000 logins per day. Many Internet Service Providers (ISPs) also manage accounts and user logins on an enormous scale also. This aspect of the invention can be applied to broader applications online to authenticate a user or uniquely identify a computer on the Internet in addition to e-commerce transactions and fighting fraud or identify theft. For example, the invention may be applied where a merchant or financial institution (FI) server resides in California, USA and a valid customer (Customer) who also normally resides in California, USA. It shall be understood that the following examples below describe login procedures which could be modified according to the invention for any other selected moment of action during an Internet session such as logout procedures, when a user clicks a "submit" button within a user interface, or transmission of any other information between users online.

During a "valid" login procedure, the Customer may initiate a login procedure from a web browser on a computer that registers a time according to its clock as follows: Time = 11:00 am / Time Zone: GMT -8 and an IP address from the California region. Meanwhile, from the perspective of the FI, the recorded time at the FI server according to its respective clock may be: Time = 11:01 am / Time Zone: GMT -8 and an IP address from the California region. It shall be understood that the invention may incorporate IP address locator tools which determine an identifier for an online device and its location based on geographic regions within a country or around the world. Upon analysis of this information from the Customer that may be reflected on a conceptual or actual Score Card, which can be calculated and stored in memory within the server of the FI or any its other network computers, the FI can determine whether there is a match indicating a valid user login. Accordingly, the exchange of information in the above described example may be reflected as a match on or as a Score Card that measures the validity of the customer: Time Diff = Match / Time Zone = Match / IP = Match.

During a "suspect" login procedure, a Customer may initiate a login procedure from a web browser on a computer that registers a time according to its clock as follows: Time = 10:02 pm / Time Zone: GMT +3 and an IP address from a region in Russia. Meanwhile, from the perspective of an FI, the recorded time at the FI server according to its respective clock may be: Time = 11:01 am / Time Zone: GMT -8 and an IP address again from its California region. Upon analysis of this information from the Customer in accordance with the invention, the Time Diff and Time Zone measurements as between the Customer and the FI are different from prior valid logins and therefore not a match. Furthermore, the IP address received by the FI indicating a device outside of the California region would not be a match and further suggest an invalid login attempt by a fraudster or other unauthorized individual. The Score Card for this login example measuring the validity of the customer can thus show: Time Diff = No Match / Time Zone = No Match / IP = No Match. The FI would be thus alerted that the alleged Customer attempting to login was likely invalid.

During a "valid" login procedure from a Customer traveling with a computer and browser in London, the Customer may initiate a login procedure at a registered time according to its clock as follows: Time = 11:00 pm / Time Zone: GMT -8 and an IP address from a region around London. Meanwhile, from the perspective of an FI, the recorded time at the FI server according to its respective clock may be: Time = 11:01 am / Time Zone: GMT -8 and an IP address again from its California region. Upon analysis of this information from the Customer, the Time Diff and Time Zone measurements as between the Customer and the FI are the same as prior valid logins and therefore a match. While the IP address received by the FI indicating a device outside of the California region would not be a match and suggest an invalid login attempt, the comparison of the Time Diff and the Time Zone measurements would be a match. Because the Time Diff parameter provided in accordance with the invention can be used in combination with other fraud parameters for authentication and identification, a Score Card for this login example measuring the validity of the customer could still show a match nevertheless: Time Diff = Match / Time Zone = Match / IP = No Match.

The Time Diff parameter provides fraud detection tools for online merchants, financial institutions and other parties conducting commerce on the Web. These tools can be applied to combat well recognized problems such as reducing the number of false positives which reduce possible revenue from mistakenly identified valid users. In addition, Time Diff based tools provide an effective solution to identifying and preventing fraud during the course of international and overseas transactions where there are significantly increased risks of fraudulent activity. Accordingly, the Time Diff parameters herein allow the creation of a more accurate and relevant geo-location or PC fingerprint for many different types of online transactions around the world.

It shall be understood that the Time Diff parameters provided in accordance in this aspect of the invention may be defined as the difference in the registered computer times as measured in any unit of time (e.g., hours, minutes, seconds, milliseconds, microseconds) between any selected computers either alone, or in combination with the Time Zone herein or any other temporal characteristics. Furthermore, as with other embodiments described herein, the concepts of the invention can be preferably applied to e-commerce transactions to deter or identify fraud but is not limited thereto and are equally applicable to any other online application to uniquely identify and link a computer device on the Internet according to a Time Diff parameter. While consideration of Time Diff parameters alone may not be completely effective as with any solution against fraud, phishing etc., the PC fingerprinting methods and techniques provided herein enables effective link analysis between computer devices and compromised accounts or any other transaction having or associated with a fraudulent past or history. By following and learning from historical incidents of security breaches and fraud, the invention can quickly pinpoint repeat offenders and build a stronger defense against different criminal behavior or schemes now known and those that will be developed in the future.

Another embodiment of the invention provides a delta of time (Delta Time) parameter that can be calculated based on the local time as indicated through the browser of a client computer (Browser Time) and the local time as determined at a server (Server Time) - also applicable in FIG. 2. The Delta Time may operate as a fingerprint for a particular client computer or computer and assists in uniquely identifying it from other computers on the Internet or selected network. Each local time for any client or server connected to the Internet or other network system can be measured according to the clock for that particular device. The measured Delta Time parameter for any selected moment of action in accordance with the invention may be perceived as having two temporal components: an actual time and a time zone. For example, the measured local time at a client site may include a Browser Time of February 1, 2005 14:00:00 PM, and a Browser Time Zone of GMT -8. The measured local time at a server site may include a Server Time of February 1, 2005 17:01:13 PM, and a Server Time Zone of GMT -5. The Delta Time as between the Browser Time and the Server Time, and the Browser Time Zone in comparison to the Server Time Zone, can be therefore calculated in accordance with the invention.

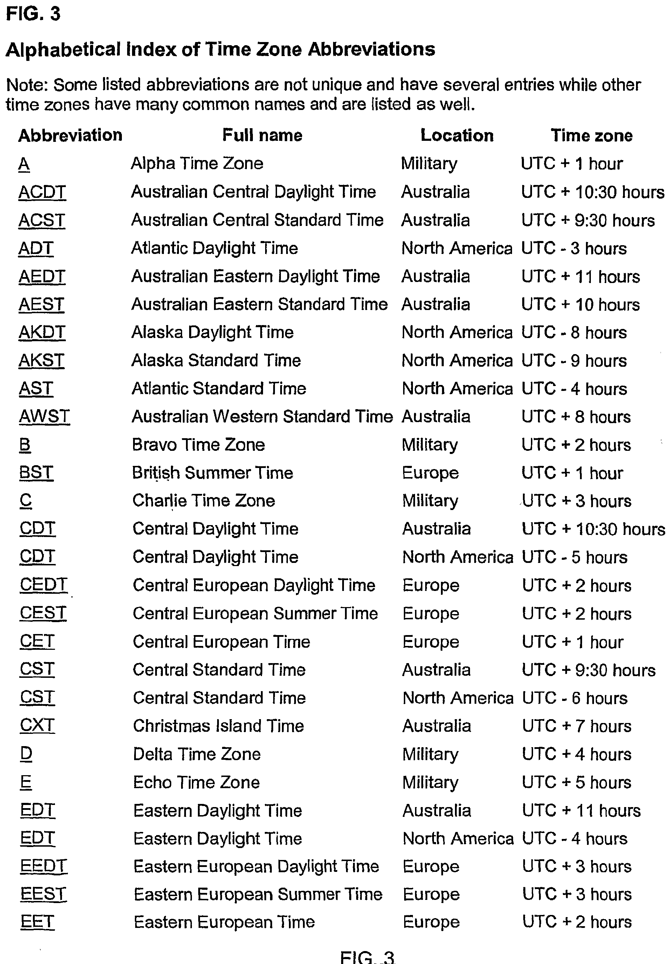

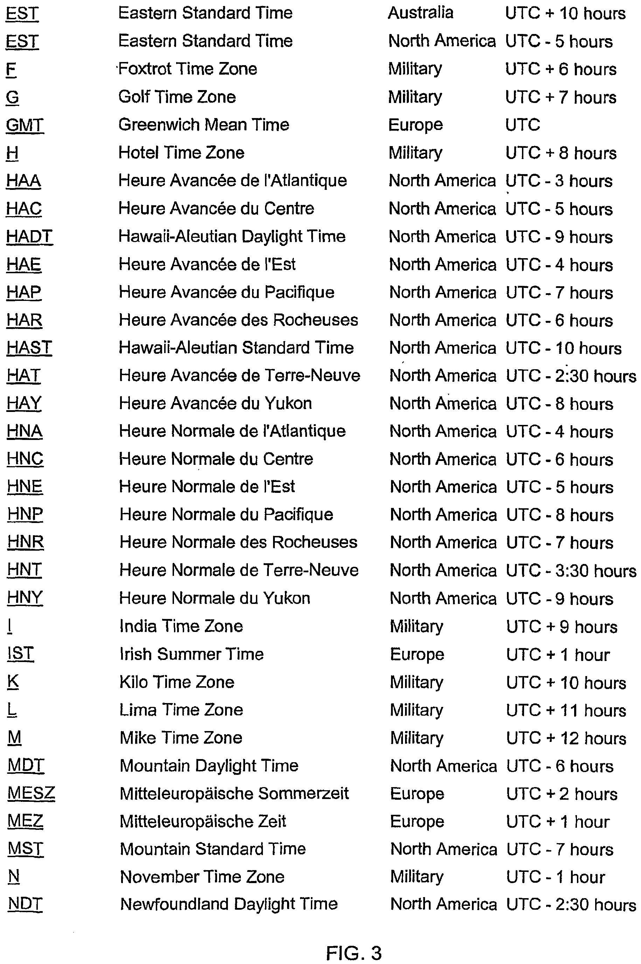

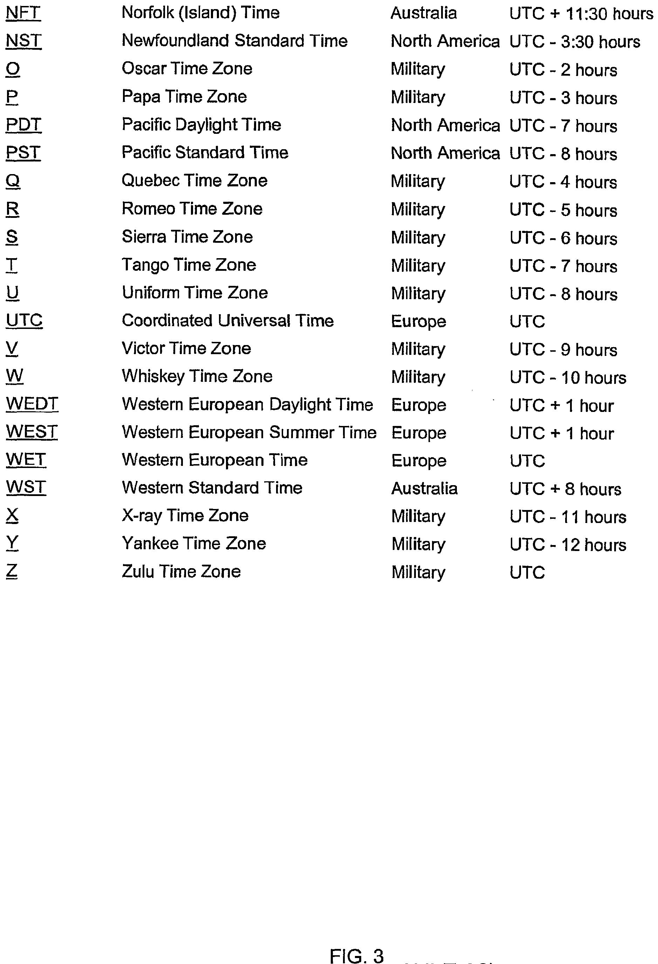

A preferable embodiment of the invention provides a Delta Time or time differential which takes into consideration daylight saving time (DST) in selected time zones and countries around the world such as those identified in FIG. 3. In addition to collecting respective local times and time zones from clients or customer computers and website servers at a current selected date or moment of action, a website server or any other network computer can also capture information relating to particular time and time zones for selected (future or even past) dates. A selected Delta Time during DST (DST Delta Time) can be determined for a particular customer or client computer when the registered time for such other date is different than the current selected date. For example, the Delta Time value for such other date(s) can be +/- one hour ahead or behind. For time zones that do not observe DST, the Delta Time value will remain unchanged during such dates when DST would be normally observed. By calculating and identifying values for Delta Time and relevant Time Zones for multiple dates ahead of time in accordance with the invention, accurate delta of time values can be provided to assist in uniquely identifying or fingerprinting a client or customer computer throughout the year regardless of whether DST is observed in the relevant country or region of the world. Because only certain countries and regions of the world observe DST while others do not, it may be possible to pinpoint in which location the device resides based at least in part on the geo-location fingerprints provided by the invention.

DST (also called Summer Time) is the portion of the year in which the local time of a region is usually advanced by one hour from its official standard time. This system was originally intended to "save" daylight, as opposed to "wasting" time (for example, by sleeping past sunrise). The official time is adjusted forward during the spring and summer months, so that the active hours of daily life involving events such as work and school will better match the hours of daylight in theory. Today approximately 70 countries utilize DST in at least a portion therein - the only major industrialized country not to have introduced daylight saving is currently Japan. DST begins for most of the United States of America at 2 a.m. on the first Sunday of April and clocks are turned (spring) forward one hour. Time reverts to standard time at 2 a.m. on the last Sunday of October and clocks are turned (fall) back one hour. Each time zone switches to and from DST at a different time. Furthermore, legislation may be passed by Congress and other state governmental bodies from time to time on whether to observe, shorten or lengthen DST. DST for the United States of America and its territories is not observed in Hawaii, American Samoa, Guam, Puerto Rico, the Virgin Islands, most of the Eastern Time Zone portion of the State of Indiana, and the state of Arizona (except the Navajo Indian Reservation which does observe DST). Meanwhile, for all countries in the European Union except Iceland, Summer Time begins and ends at 1 am Coordinated Universal Time, UTC (Greenwich Mean Time, GMT) which generally starts on the last Sunday in March, and ends the last Sunday in October. All time zones change at the same moment in the EU. It shall be understood that observance of DST is controversial and ever changing so the delta of time parameter provided in accordance with this embodiment of the invention can be flexibly adapted to devices all over the world when it changes and whether or not DST is observed in certain countries or states within particular time zones.

In this embodiment of the invention, various time zones as shown in FIG. 3 can be predetermined such that it is known ahead of time whether or not DST is applicable for that region. For example, a Delta Time parameter may be calculated for a client computer at some future date(s) during DST. When the clock of a client computer registers a time of 8:00 pm PST (Greenwich Mean Time GMT -8) on a selected date during the fall season, its respective delta of time is changed one hour ahead to 9:00 pm PST (GMT -8) on a selected date in the spring season to account for DST when applicable. By collecting and determining times at one or more selected dates in the future, it is possible to determine whether a device will or will not go into DST from the beginning rather than waiting until later to see whether the registered time is the same or different. This will also assist in identifying the country or region for a selected user device. Accordingly, seemingly unrelated transactions can be linked at least in part from a distinctive timestamp delta of time (Delta Time) that can be measured from the internal clock or data (TCP, NTP, RTP etc. timestamps within data packets) sent from the device. It should be understood that the Delta Time parameter can be calculated according to any selected units of time as with other embodiments of the invention herein such as minutes, seconds, or milliseconds.

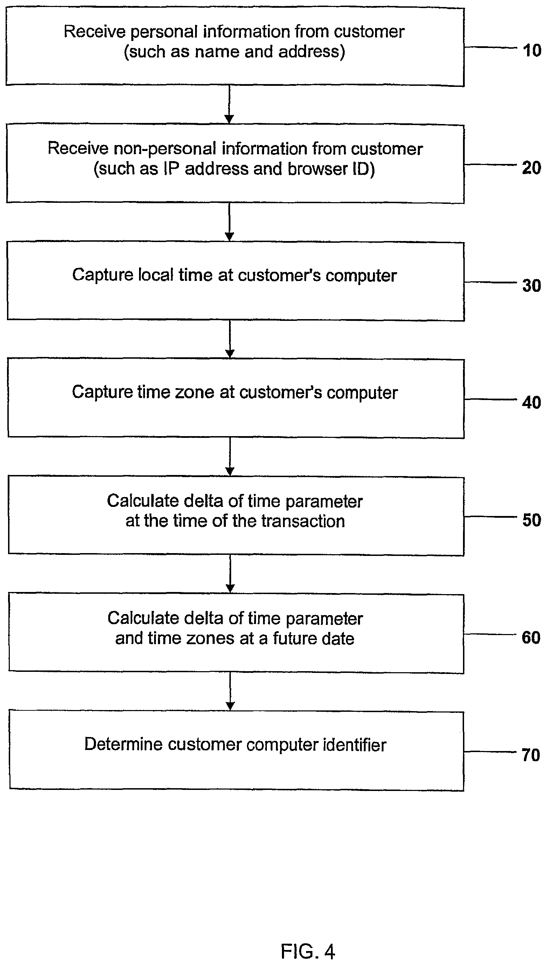

FIG. 4 is flow chart depicting another aspect of the invention that provides methods for determining a customer computer identifier (CI) used in detecting fraud in connection with online commercial transactions. At step 10, a merchant web server receives customer personal information, such as name, address, phone number, etc. At step 20, the web server receives non-personal information from the customer such as IP address and Browser ID. At steps 30 and 40, the web server captures the local time and the time zone at the customer computer. The delta of time parameter is then calculated at the time of the transaction at step 50. It should be noted that the delta of time parameter may be calculated at the time of the customer login, other times during a transaction or at any selected moment of action. At step 60, the delta of time parameter and time zones are calculated at one or more future selected dates. Using the customer information and the delta of time parameters, the customer computer identifier is determined at step 70. Any one or more of these steps may be used in combination with each other and in a different order of operation depending on selected applications. It should be further understood that processes in accordance with this embodiment of the invention may provide a delta of time parameter and a computer identifier described elsewhere herein and also used together with other aspects of the invention, e.g. FIG. 2.

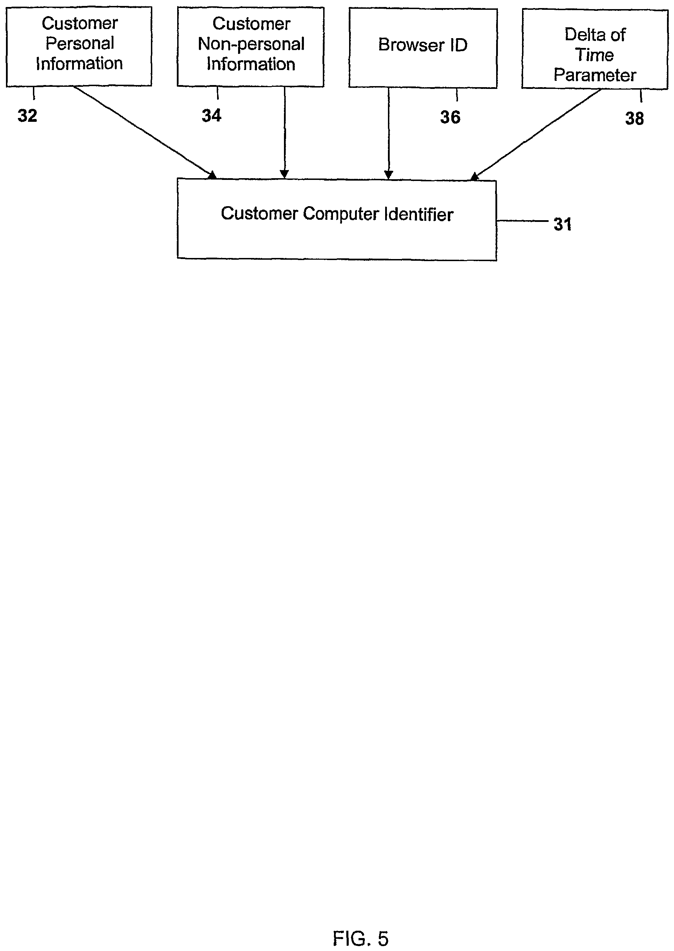

In another preferable embodiment of the invention, as illustrated in FIG. 5, a particular subset of selected parameters or fields can combined or aggregated to construct a customer computer identifier 31. For example, the customer computer identifier 31 can be determined based on selected customer personal information 32, customer non-personal information 34, including a Browser ID 36 and a delta of time parameter 38. These selected parameters are not meant to be limiting and other information or fraud parameters described herein or otherwise known to those of ordinary skill may be used to create a customer computer identifier 31. Specifically, another preferable embodiment of the invention includes a customer computer identifier consisting of a delta of time parameter plus a Browser ID alone which can be used to identify or "fingerprint" a user computer. But the selected customer information 32 alone is not entirely reliable by itself as it can not be easily validated as suggested above. Nevertheless when combined with non-personal information 34, and in particular a measured delta of time parameter, other embodiments of the invention may provide reliable and effective methods of identifying computers on the Internet such as those associated with known fraudulent transactions. The delta of time parameters provided in accordance with this and other aspects of the invention herein offer fingerprinting capabilities that uniquely identify particular computing devices used in e-commerce transactions. Because computer users rarely personally change the internal clocks within their computers, the delta of time parameter will likely be the same (or within a range or within predictable limits) for a computer every time that computer is used to conduct an online transaction with the same merchant even if the user disguises or changes the IP address. The Browser ID is also not likely to be changed, even by a consumer seeking to perpetuate a fraudulent transaction. Thus, the delta of time parameter (the difference between the time of day of the computer user's clock and the time of day on the website's server clock as in FIG. 2) is an important component of the computer identifier because it, along with the preferred Browser ID or other personal or non-personal information, is a good indication of the identity of a subsequent user on the same computer. The delta of time parameter also allows the merchant to potentially locate the computer in terms of a time zone, region, or country.

Accordingly, once a merchant determines that a first fraudulent transaction may have been made, the merchant can flag the customer computer identifier, i.e. Browser ID and delta of time. In a preferred embodiment, the computer identifier will include at least its delta of time and Browser ID, but may also include other personal and/or non-personal information. Then, the matching parameter can be used to identify a subsequent transaction which reveals a user with an identical set of computer identifiers. The matching is typically implemented by software, for example, on a hard disk, floppy disk, or other computer-readable medium.

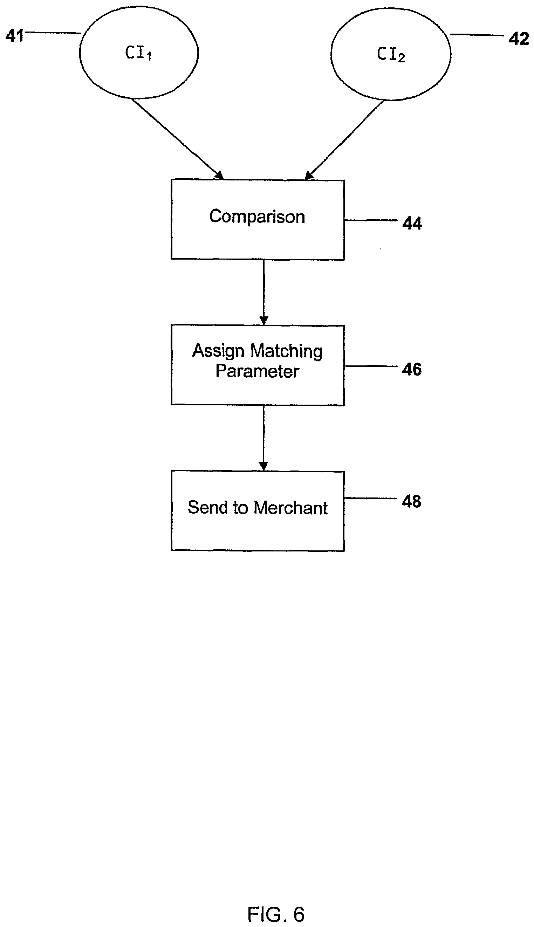

A flowchart is provided in FIG. 6 that illustrates methods to detect fraud according yet another embodiment of the invention. Once a merchant web server determines the computer identifier (CI) for a first transaction, CI₁ 41 and a subsequent transaction, CI₂ 42, a comparison can be made as between the two identifiers 41 and 42 and performed at step 44 as illustrated. After the comparison has been made, a computer implemented software program may continue to execute the next step of assigning a matching parameter value to the pair of transactions based on the similarities between the first and subsequent transactions, at step 46. At step 48, the website server running the program to compare computer identifiers may inform the merchant of the matching parameter value, which in turn may provide information suggesting to cancel or confirm the transaction, inform the costumer status order, demand more information, or the like. The merchant may then choose its desired course of action. It shall be understood that the memory of a merchant web server may contain software programs with instructions to perform any combination of these steps to provide these and any other methods described herein in accordance with the invention.

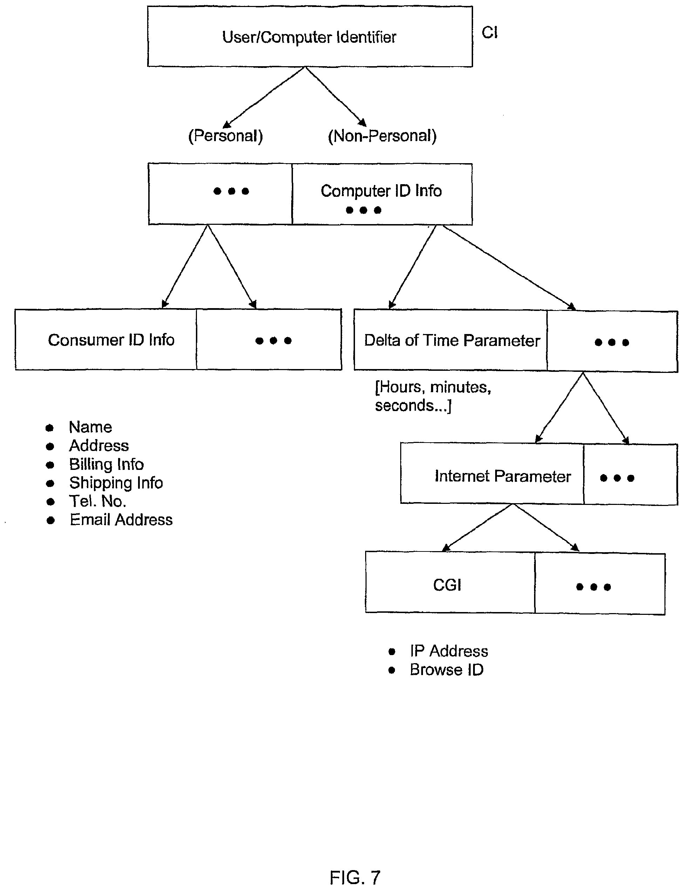

FIG. 7 provides a hierarchical representation of user computer identifiers (CIs) for the identification and prevention of online fraud that may be generated as described with the various embodiments of the invention. A computer identifier (CI), which may uniquely identify a computer associated or linked to known fraudulent transactions (or for alternative purpose described herein), may comprise both personal and non-personal parameters. Personal parameters may include consumer identification (ID) information and other selected personal parameters. Examples of selected consumer ID information include but are not limited to the following: user or personal name, address, billing information, shipping information, telephone number(s), e-mail address(es). Meanwhile, non-personal parameters may include a variety of known fraud parameters including computer identification (ID) information. This includes delta of time parameters as described herein which may be measured in any increment of time such as hours, minutes, seconds and milliseconds. Other computer ID information includes Internet Parameters such as Common Gateway Interface (CGI) parameters including a customer computer Internet Protocol (IP) Address and Browser ID.

A particularly important feature of the present invention is the merchant's ability to include, remove, and weigh each parameter within the computer identifier. For example, the merchant may choose to only use the delta of time parameter and Browser ID to form the unique computer identifier. Accordingly, the merchant may set the matching parameter to fit a level of comparison between the first and subsequent transaction. For example, since deltas of time may slightly change because of the differences in accuracy between the server and the user computer clock mechanism, computer clocks and deltas may slightly vary over time. The merchant may set the matching parameter to include a range of delta of time, such as a few minutes, instead of an exact match. This way, even if the user computer "loses time", the matching parameter will still identify the subsequent transaction as a potential fraudulent one based on other information within the computer identifier.

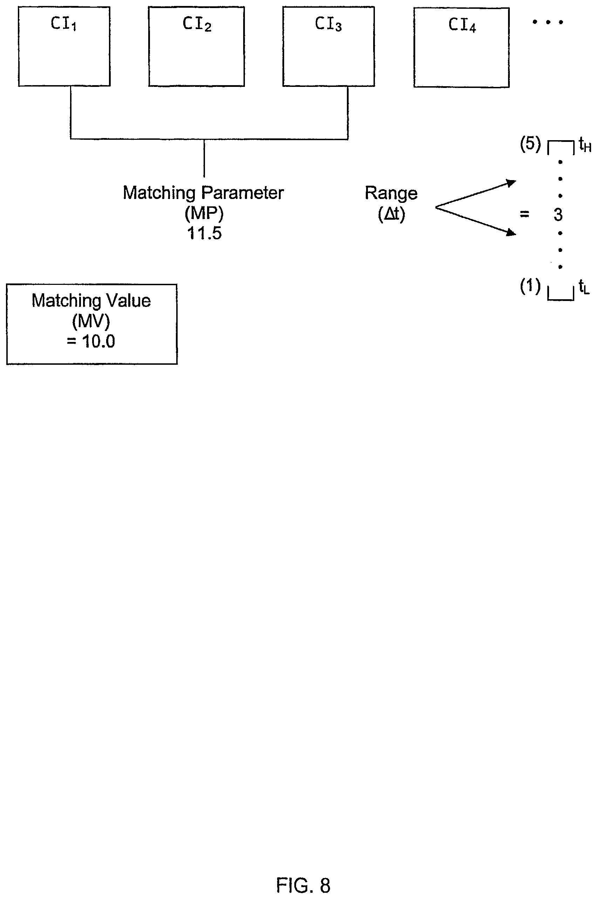

A series of computer identifiers (CIs) are shown in FIG. 8 which can be matched, e.g., CI₁ - CI₄... When a CI is generated by a method or software program by a computer to be identified or associated with a known fraudulent transaction, it can be compared to another selected CI. During a comparison step between the two, a matching parameter (MP) may be calculated. The calculated value of the MP may consist of a raw number or score that is dimensionless, e.g., 11.5, or some increment of measurement including time, e.g., hours, minutes, seconds, milliseconds. The matching parameter may be thus compared in a next step to a preselected reference or baseline Matching Value (MV), e.g., 10.0. A merchant or anyone trying to identify the computer can variably set the MV relative to anticipated or measured MP values. Because of slight differences in computer clocks, network latency, variable Web traffic and bandwidth constraints, the delta of time parameters provided herein may vary from time to time even for the same selected computer. A preselected range (delta t) may be therefore defined in accordance with this aspect of the invention that allows for a certain tolerance setting or range (Range) of MP values relative to the MV. For example, an lower limit within the Range may allow for a [+/- 1] variance of the MP value relative to the MV, or a higher limit within the Range may allow for a [+/- 5] variance. When the MP value falls within the defined Range relative to the MV, this can indicate a positive match or identification (ID) of a device for various purposes as described herein such as linking a computer to known online fraudulent transactions. When the MP value falls outside of the defined Range relative to the MV, this can indicate a negative match or identification (ID) of a device. It shall be understood that these MP values may be alternatively defined as a Score Card value and incorporated with other corresponding aspects of the invention described elsewhere herein to detect and prevent online fraud. The matching parameters, values and ranges described in accordance with this variation of the invention can be modified and defined in a variety of ways and are not limited to those specifically provided for illustrative purposes. The preceding steps may be carried out as methods provided herein, or alternatively as a series of software program instructions and code.

Furthermore, in accordance with another concept of the invention, the delta of time parameter may be measured as between different times resulting from inherent limitations or flaws of the computer clock(s) in a single device as opposed to multiple devices. In this embodiment of the invention, a device fingerprint or PC fingerprint is created to uniquely identify and link a computer to known fraudulent transactions or behavior by measuring and tracking an inherent inaccuracy or flaw of a resident clock. In comparison to other embodiments of the invention, which may be described as an "external" delta of time as between two different devices (host server / user client), another variation provided herein provides a device identifier using what may be considered an "internal" delta of time as between a single device itself (standalone). Over a period of time, computers clocks as with other ordinary clocks are not perfect and tend to run fast or slow eventually. The rate at which time is gained or lost for a computer clock may be defined as "clock skew" and can be measured in microseconds per second (clock skew may be also defined as the instantaneous difference between readings of any two clocks or the time what a computer thinks it is as compared to another clock). If the clock has a non-zero skew, not only is the end-to-end delay measurement off by an amount equal to what can be defined as clock offset, it also gradually increases or decreases over time depending on whether it is running relatively faster or slower. Even when there is a constant clock skew, the clock offset values increases or decreases over time depending on the sign (+/-) of the skew. So any given computer or device described herein can have a single or multiple clocks (e.g., systems clock, TCP timestamps options clock) that are unable to remain consistent and accurately track time. But the clock skew of a particular device may be different from other (even seemingly identical) computers, and thus serve as a PC fingerprint linking it to certain transactions and fraud. It is generally well known that different computer systems have different and relatively constant clock skews. This imperfection or flaw in the device can thus exploited in a way to identify a particular device or computer in relation to certain transactions and behavior since it is relatively persistent and unique in accordance with the invention. The internal delta of time provided in accordance with this embodiment can be therefore applied in the same manner as any other external delta of time described elsewhere herein to provide a PC fingerprint linked to transactions carried out on devices involving e-tail or e-commerce fraud, breaches in security and various types of criminal online behavior.

In this embodiment of the invention, the delta of parameter can be measured in units of microseconds per second (ms/s, first derivative or rate at which time is gained or lost) while in other embodiments of the invention the parameter can be measured in microseconds. This delta of time parameter can therefore be defined as a time difference measured between a first clock measurement and a second clock measurement over a selected period of time or time interval. For example, the TCP timestamp of a first packet of data from a computer may indicate a time t1 (9:01am) while a second packet may be sent at time t2 (9:02am). The first and second packets may arrive at a server at times t3 (9:04am) and t4 (9:07am), respectively. The clock skew of the computer can be thus calculated as the rate at which time is lost in this instance: t3-t1 = 3 mins; t4-t2 = 5 mins (may assume time differences are not attributed to network delays, latency etc. beyond clock skew). The internal delta of time parameter or clock skew in the context of this embodiment of the invention herein may be calculated as follows: 5 mins - 3 mins = 2 mins divided by 3 mins (which is the selected period of time between first and second packets). In other words, during the 3 mins of time between sending the first and second data packets, the computer clock lost or ran slow 2 mins (0.666 min/min). While clock skew in general is instead measured on the order of microseconds rather than minutes, this example illustrates how these and other embodiments of the invention are not limited to certain ranges. Other units of measurements are applicable to the delta of time parameters as mentioned elsewhere herein. It shall be understood that both internal and external deltas of time can be applied individually or in combination by themselves, or in addition to other parameters as described herein to provide a distinctive PC fingerprint.

Another aspect of the invention provided herein extends to detecting and preventing fraudulent transaction based on information obtained through "scams" or deceptive practices developed to gain personal, confidential and/or financial information. For example, a common technique today known as "phishing" involves gaining personal information from an individual to commit identify theft by typically using fraudulent e-mail messages that appear to come from legitimate businesses. "Phishing" can be defined as the act of sending an e-mail to a user falsely claiming to be an established legitimate enterprise in an attempt to scam the user into surrendering private information that will be used for identity theft. The e-mail often directs the user to visit a Web site where they are asked to provide or update personal information, such as passwords and credit card, social security, and bank account numbers, that the legitimate organization already has. But the Web site to which the user is directed is phony and established to steal the user information during a fake session. For example, a widely recognized Web site, e.g., eBay, can be targeted in a phishing scam whereby users received e-mails supposedly claiming that the user account is about to be suspended unless they clicked-on a provided link and updated the credit card information that the genuine Web site already had. Because it is relatively simple to make a Web site look like a legitimate organizations site by mimicking the HTML code, people can be tricked into thinking they were actually being contacted by the Web site and will subsequently go to the fraudulent site to update or provide their account information. Moreover, by spamming large groups of people (or spIMming them which spam sent over Instant Messaging (IM) applications that can include links to fake sites), the "phisher" could rely on a response from at least some percentage of people who actually had listed credit card numbers with the Web site legitimately. The concept of phishing in general can also referred to as brand spoofing or carding, a variation on the idea whereby bait is set with the hope that some will bite despite most individuals knowing better. By way of these seemingly legitimate e-mails, criminals "go fishing" for information which is in turn later used to gain access to a real account. Such information includes commonly stolen items in identify theft including a personal identification number (PIN), user account name, a credit card number, and an account number. Regardless of how this information is obtained, the fraud detection and prevention systems provided herein incorporate unique fraud parameters such as delta of time and clock differential parameters to "phish"-out fraudsters from legitimate users.

The criminal act that is often committed after information is "phished" can be ultimately referred to as "account takeover." These scams are commonly committed by e-mail to users at least partially because millions can be rapidly and efficiently sent to random or selected individuals, but other techniques can involve transmission of a virus through attachments to e-mails. In particular, some viruses can be created to replace the universal resource locator (URL) of a merchant, financial institution or other party commonly stored in a web browser "Favorites" folder. Instead of being routed to an intended legitimate Web site, the user is sent to a fake or spoofed site where user information is shared unknowingly with a fraudster. Similar in nature to e-mail phishing, another Internet scam referred to as "pharming" seeks to obtain personal or private (usually financial related) information through domain spoofing. Rather than being spammed with malicious and mischievous e-mail requests for you to visit spoof Web sites which appear legitimate, pharming can "poison" a DNS server by infusing into it false information resulting in a user request being redirected elsewhere. A browser however will indicate the correct Web site location, which can make pharming a bit more serious and more difficult to detect. A distinction however is that generally phishing attempts to scam people one at a time with an e-mail while pharming allows the scammers to target large groups of people at one time through domain spoofing. Meanwhile, "spoofing" basically includes a variety of ways in which hardware and software can be fooled into operating as if there was a legitimate transaction or exchange taking place. "IP spoofing" more particularly involves trickery that makes a message appear as if it came from an authorized IP address, e.g., e-mail spoofing. As a result, access can be gained to computers through IP spoofing when an intruder sends messages to a computer with an IP address indicating that the message is coming from a trusted host. To engage in IP spoofing, a hacker must first use a variety of techniques to find an IP address of a trusted host and then modify the packet headers so that it appears that the packets are coming from that host.

Malicious software (aka malware) can be also involuntarily downloaded to a computer and designed specifically to damage or disrupt a system by means of a virus or a Trojan horse. A "Trojan horse" is a program that masquerades as a benign application and unlike many viruses, they do not replicate themselves but can be just as destructive. One of the most insidious types of Trojan horse is a program that claims to rid your computer of viruses but instead introduces viruses onto a computer. The concepts relating to fraud detection and prevention can be applied also to other traditional methods of stealing personal information also include e-mail or other means that involve a fake premise or story such as seeking help fleeing from a third world country (e.g., Nigerian scam) or conducting some type of customer service call or transaction (e.g., "Hello, I am from your bank...").

The fundamental problem of user authentication is exploited time and time again in order to commit fraudulent transaction online. Both financial institutions and merchants face a shared problem and ultimate challenge in properly authenticating who is really on the opposite end of a transaction. Information such as account user names and passwords are useless and rendered ineffective as reliable credentials in light of phishing and other Internet fraud scams. Authentication can be attempted by obtaining various types of information broadly ranging from any or all of the following: something you have; something you know; and/or something you are (biometrics). These include information obtained from tokens (hard, soft, dynamic), shared secret or things not commonly known such as a mother's maiden, a pet's name or a favorite color. An evolving system of security certificates (encryption with public key infrastructure (PKI), secure sockets layer (SSL)) may be relied upon also to verify and authenticate the validity of a party involved in an Internet transaction. Third party bureaus are also relied upon to provide information that can be used to authenticate an individual such as D&B reports, credit histories from Equifax and other agencies, and also Caller ID to identify the number associated with a person. At the same time, a user may attempt to authenticate a merchant, bank or other party at the other end of an online transaction also. Various tool bars may be employed to allow users to verify a web site, an IP address or some other indication that a user is indeed in contact with a merchant, bank or other desired party in a transaction.

The information and actions by a party attempting to prevent or detect fraud is often met with an equally effective and opposite countermeasure by learned fraudsters. When banks or merchants create user names and passwords, they can be rendered ineffective by numerous scams and ways of obtaining user information such as phishing and key-loggers. "Key-loggers" are a type of surveillance software such as spyware that has the capability to record keystrokes to a log file (usually encrypted) made from instant messages, e-mail and any information (including e-mail addresses and Web site URLs visited) typed using a keyboard which can be later sent to a specified receiver. Key-loggers, as a surveillance tool, are often used by employers to ensure employees use work computers for business purposes only. Unfortunately, key-loggers can also be embedded in spyware allowing your information to be transmitted to an unknown third party.) Similarly, cookies that are often created to contain selected information used for identification can be simply deleted, and IP addresses that are associated with fraud can simply hide behind proxies.

Furthermore, when tokens are frequently used as a security measure to gain access to user information, the entire session or exchange can be merely cloned. The term "session cloning" may be defined as the ability of a third party to duplicate the session ID of a user and use it to interact with the web-based application at the same time as the original user. Session cloning is generally more of a threat when session IDs are predictable or obtainable, or if the site allows IP hopping. IP hopping is permitting the user to change their IP address mid-session without having to re-authenticate to the web site. To minimize fraud and prevent IP hopping, one alternative is to track the domain of the source address (remembering domains can have more than two components) and require re-authentication if the domain changes. This does not prevent IP hopping within the same ISP but does limit the exposure. Another option to minimize risk is to consider using an inactivity timeout or terminating a session after a certain period of inactivity in order to protect people who leave their accounts signed-on and their systems unattended. Regardless of these preventative measures taken against session cloning, the risk of fraud remains which provides an opportunity for the invention herein to detect and prevent such activity when an attempt is made to use information from a computer.

It shall be understood that the description of fraudulent schemes provided herein is not exhaustive and that additional techniques will be developed in the future to improperly gain access to user information. Regardless of the means and methods used to obtain such information, the concepts of the invention can be applied to detect and prevent fraud by uniquely linking or fingerprinting such criminal activity with devices based upon selected delta of time parameters, clock differentials and time based parameters provided elsewhere herein. These solutions can be implemented with no behavioral modification and have a zero imposition on a user as new ways are constantly developed to break past security barriers. The onus is not placed on the consumer to prevent attacks, nor is the consumer asked to change certain behavior to combat phishing or any other criminal behavior or scheme developed in the future.

Although the present invention has been described in accordance with the embodiments shown, one of ordinary skill in the art will recognize that there could be variations to the embodiment and those variations would be within the scope of the present invention. Therefore, although the present invention was described in terms of a particular fraud prevention method and system, one of ordinary skill in the art readily recognizes, that any number or parameters can be utilized and their use would be within the scope of the present invention.

## Claims

1. A method for identifying a computer (12) comprising the steps of:
in the course of a first online transaction between a computer and an electronic commerce business:
obtaining selected information about the computer during the first online transaction including a local time according to a resident computer clock and at least one non-personal identification parameter;
measuring a local server time from a website server (14) clock;
calculating a delta of time parameter (38) based upon a difference in time between the local server time and the local time according to the resident computer clock; and
generating a first computer identifier (31) to identify the computer that is derived from the delta of time parameter in combination with at least one non-personal identification parameter related to the computer;
in the course of a second online transaction between a computer and an electronic commerce business:
obtaining selected information about the computer during the second online transaction including a local time according to a resident computer clock and at least one non-personal identification parameter;
measuring a local server time from a website server (14) clock;
calculating a delta of time parameter (38) based upon a difference in time between the local server time and the local time according to the resident computer clock; and
generating a second computer identifier (31) to identify the computer that is derived from the delta of time parameter in combination with at least one non-personal identification parameter related to the computer;
flagging the first computer identifier in response to determining the first online transaction may be a fraudulent transaction;
comparing, with aid of the processor, the first computer identifier and the second computer identifier;
determining, with aid of the processor, that a measured difference between the delta of time parameter of the first computer identifier and the delta of time parameter of the second computer identifier falls within a selected range; and
indicating, to the electronic commerce business that the computer was used in the first online transaction and the second online transaction, based at least on the determination that the measured difference falls within the selected range.

2. The method as recited in claim 1 further comprising the step of:
obtaining additional identification parameters including personal identification information from the selected information.

3. The method as recited in claim 2, wherein the personal identification information includes consumer identification information.

4. The method as recited in claim 3, wherein the consumer identification information includes at least one of the following: consumer name, address, billing information, shipping information, telephone number and e-mail address.

5. The method as recited in claim 1, wherein the non-personal identification parameter is computer identification information.

6. The method as recited in claim 5, wherein the computer identification information includes an Internet parameter.

7. The method as recited in claim 6, wherein the Internet parameter is a CGI parameter.

8. The method as recited in claim 7, wherein the CGI parameter includes at lease one of the following: IP address, and Browser ID.

9. The method as recited in claim 1, further comprising the step of:
capturing relevant time zone information in which the computer is physically located from the selected information about the computer.

10. The method as recited in claim 9, wherein the relevant time zone information is for one or more future dates to indicate whether DST is observed in the relevant time zone.

11. A computer readable medium containing program instructions for performing all the steps of claim 1.

12. The method as recited in claim 1, wherein the delta of time parameter for the first and second computer identifiers are each a measured amount of time to travel from the computer to a web site server according to a timestamped packet of data that is transmitted during the first and second online transaction respectively.

13. The method as recited in claim 1, wherein the delta of time parameter is measured over a time interval of a measured time between when a first timestamped packet of data and a second timestamped packet of data are sent by the computer, and wherein each include TCP timestamp information.

14. The method as recited in claim 1, wherein the delta of time parameter is a clock skew for the computer.

15. A computer readable medium according to claim 11 comprising a computer program further configured to perform the additional steps recited in claim 12 to identify a computer.

16. A system for detecting potentially fraudulent transactions comprising:
a customer computer (12); and
a merchant web server (14),
wherein the merchant web server comprises a clock and is arranged for each of first and second online transactions:
to capture the customer computer local time; to receive non-personal customer information;
to calculate a delta of time between the customer computer local time and the server's clock; and
to generate a computer identifier to identify the customer computer that is derived from the delta of time in combination with the non-personal customer information;
thereby to provide a first computer identifier for a customer computer involved in the first online transaction and a second computer identifier for a customer computer involved in the second online transaction;
wherein the merchant web server is further configured to:
flag the first computer identifier in response to determining the first online transaction may be a fraudulent transaction;
compare the first computer identifier and the second computer identifier;
determine that a measured difference between the delta of time of the first computer identifier and the delta of time of the second computer identifier falls within a selected range; and
indicating that the customer computer was used in the first online transaction and the second online transaction, based at least on the determination that the measured difference falls within the selected range.

17. A computer system configured as the merchant web server of claim 16.

## Patentansprüche

1. Verfahren zum Identifizieren eines Computers (12), umfassend die Schritte:
im Verlauf einer ersten Online-Transaktion zwischen einem Computer und einem Unternehmen für elektronischen Handel:
Erhalten ausgewählter Informationen über den Computer während der ersten Online-Transaktion, einschließlich einer lokalen Zeit gemäß einer residenten Computeruhr und mindestens eines nicht personenbezogenen Identifikationsparameters;
Messen einer lokalen Serverzeit von einer Uhr eines Website-Servers (14);
Berechnen eines Zeitdifferenzparameters (38) basierend auf einem Zeitunterschied zwischen der lokalen Serverzeit und der lokalen Zeit gemäß der residenten Computeruhr; und
Erzeugen einer ersten Computerkennung (31) zum Identifizieren des Computers, die aus dem Zeitdifferenzparameter in Kombination mit mindestens einem nicht personenbezogenen Identifikationsparameter, der sich auf den Computer bezieht, abgeleitet wird;
im Verlauf einer zweiten Online-Transaktion zwischen einem Computer und einem Unternehmen für elektronischen Handel:
Erhalten ausgewählter Informationen über den Computer während der zweiten Online-Transaktion, einschließlich einer lokalen Zeit gemäß einer residenten Computeruhr und mindestens eines nicht personenbezogenen Identifikationsparameters;
Messen einer lokalen Serverzeit von einer Uhr eines Website-Servers (14);
Berechnen eines Zeitdifferenzparameters (38) basierend auf einem Zeitunterschied zwischen der lokalen Serverzeit und der lokalen Zeit gemäß der residenten Computeruhr; und
Erzeugen einer zweiten Computerkennung (31) zum Identifizieren des Computers, die aus dem Zeitdifferenzparameter in Kombination mit mindestens einem nicht personenbezogenen Identifikationsparameter, der sich auf den Computer bezieht, abgeleitet wird;
Kennzeichnen der ersten Computerkennung in Reaktion auf das Bestimmen, dass die erste Online-Transaktion eine betrügerische Transaktion sein kann;
Vergleichen, mithilfe des Prozessors, der ersten Computerkennung und der zweiten Computerkennung;
Bestimmen, mithilfe des Prozessors, dass eine gemessene Differenz zwischen dem Zeitdifferenzparameter der ersten Computerkennung und dem Zeitdifferenzparameter der zweiten Computerkennung in einen ausgewählten Bereich fällt; und
Angeben, für das Unternehmen für elektronischen Handel, dass der Computer in der ersten Online-Transaktion und der zweiten Online-Transaktion verwendet wurde, mindestens basierend auf dem Bestimmen, dass die gemessene Differenz innerhalb des ausgewählten Bereichs liegt.

2. Verfahren nach Anspruch 1, ferner umfassend den Schritt:
Erhalten zusätzlicher Identifikationsparameter, einschließlich personenbezogener Identifikationsinformationen, aus den ausgewählten Informationen.

3. Verfahren nach Anspruch 2, wobei die personenbezogenen Identifikationsinformationen Verbraucheridentifikationsinformationen enthalten.

4. Verfahren nach Anspruch 3, wobei die Verbraucheridentifikationsinformationen mindestens eines der Folgenden enthalten: Name, Adresse, Rechnungsinformationen, Versandinformationen, Telefonnummer und E-Mail-Adresse des Verbrauchers.

5. Verfahren nach Anspruch 1, wobei die nicht personenbezogenen Identifikationsparameter Computeridentifikationsinformationen sind.

6. Verfahren nach Anspruch 5, wobei die Computeridentifikationsinformationen einen Internetparameter enthalten.

7. Verfahren nach Anspruch 6, wobei der Internetparameter ein CGI-Parameter ist.

8. Verfahren nach Anspruch 7, wobei der CGI-Parameter mindestens eine der Folgenden enthält: IP-Adresse und Browser-ID.

9. Verfahren nach Anspruch 1, ferner umfassend den Schritt:
Erfassen relevanter Zeitzoneninformationen, in denen sich der Computer physisch befindet, aus den ausgewählten Informationen über den Computer.

10. Verfahren nach Anspruch 9, wobei die relevanten Zeitzoneninformationen dazu dienen, für ein oder mehrere zukünftige Datumsangaben anzugeben, ob die Sommerzeit in der relevanten Zeitzone gilt.

11. Computerlesbares Medium, das Programmanweisungen zum Durchführen aller Schritte von Anspruch 1 enthält.

12. Verfahren nach Anspruch 1, wobei der Zeitdifferenzparameter für die erste und zweite Computerkennung jeweils eine gemessene Zeitdauer darstellen, um von dem Computer zu einem Website-Server gemäß einem mit einem Zeitstempel versehenen Datenpaket zu gelangen, das jeweils während der ersten und zweiten Online-Transaktion übertragen wird.

13. Verfahren nach Anspruch 1, wobei der Zeitdifferenzparameter über ein Zeitintervall einer gemessenen Zeit zwischen einem ersten mit Zeitstempel versehenen Datenpaket und einem zweiten mit Zeitstempel versehenen Datenpaket, die von dem Computer gesendet werden, gemessen wird, und wobei jedes davon eine TCP-Zeitstempelinformation enthält.

14. Verfahren nach Anspruch 1, wobei der Zeitdifferenzparameter eine Taktverschiebung für den Computer ist.

15. Computerlesbares Medium nach Anspruch 11, umfassend ein Computerprogramm, das ferner konfiguriert ist, um die zusätzlichen Schritte nach Anspruch 12 durchzuführen, um einen Computer zu identifizieren.

16. System zum Erkennen potenziell betrügerischer Transaktionen, umfassend:
einen Kundencomputer (12); und
einen Händler-Webserver (14),
wobei der Händler-Webserver eine Uhr umfasst und für jede von der ersten und zweiten Online-Transaktion vorgesehen ist:
um die lokale Zeit des Kundencomputers zu erfassen; um nicht personenbezogene Kundendaten zu erhalten;
eine Zeitdifferenz zwischen der lokalen Zeit des Kundencomputers und der Uhr des Servers zu berechnen; und
eine Computerkennung zu erzeugen, um den Kundencomputer zu identifizieren, der aus der Zeitdifferenz in Kombination mit den nicht personenbezogenen Kundeninformationen abgeleitet wird;
um dadurch eine erste Computerkennung für einen an der ersten Online-Transaktion beteiligten Kundencomputer und eine zweite Computerkennung für einen an der zweiten Online-Transaktion beteiligten Kundencomputer bereitzustellen;
wobei der Händler-Webserver ferner konfiguriert ist, um:
die erste Computerkennung in Reaktion auf das Bestimmen, dass die erste Online-Transaktion eine betrügerische Transaktion sein kann, zu kennzeichnen;
die erste Computerkennung und die zweite Computerkennung zu vergleichen;
zu bestimmen, dass eine gemessene Differenz zwischen der Zeitdifferenz der ersten Computerkennung und der Zeitdifferenz der zweiten Computerkennung in einen ausgewählten Bereich fällt; und
anzugeben, dass der Kundencomputer in der ersten Online-Transaktion und der zweiten Online-Transaktion verwendet wurde, mindestens basierend auf dem Bestimmen, dass die gemessene Differenz innerhalb des ausgewählten Bereichs liegt.

17. Computersystem, das als Händler-Webserver nach Anspruch 16 konfiguriert ist.

## Revendications

1. Procédé d'identification d'un ordinateur (12), comprenant les étapes suivantes :
dans le cadre d'une première transaction en ligne entre un ordinateur et une entreprise de commerce électronique :
l'obtention d'informations sélectionnées concernant l'ordinateur au cours de la première transaction en ligne, comportant une heure locale selon une horloge d'ordinateur résidante et au moins un paramètre d'identification non personnel ;
la mesure d'une heure locale de serveur à partir d'une horloge d'un serveur de site Web (14) ;
le calcul d'un paramètre d'écart horaire (38) sur la base d'une différence horaire entre l'heure locale de serveur et l'heure locale selon l'horloge d'ordinateur résidante ; et
la génération d'un premier identifiant d'ordinateur (31) afin d'identifier l'ordinateur, lequel est dérivé du paramètre d'écart horaire en association avec au moins un paramètre d'identification non personnel lié à l'ordinateur ;
dans le cadre d'une deuxième transaction en ligne entre un ordinateur et une entreprise de commerce électronique :
l'obtention d'informations sélectionnées concernant l'ordinateur au cours de la deuxième transaction en ligne, comportant une heure locale selon une horloge d'ordinateur résidante et au moins un paramètre d'identification non personnel ;
la mesure d'une heure locale de serveur à partir d'une horloge d'un serveur de site Web (14) ;
le calcul d'un paramètre d'écart horaire (38) sur la base d'une différence horaire entre l'heure locale de serveur et l'heure locale selon l'horloge d'ordinateur résidante ; et
la génération d'un deuxième identifiant d'ordinateur (31) afin d'identifier l'ordinateur, lequel est dérivé du paramètre d'écart horaire en association avec au moins un paramètre d'identification non personnel lié à l'ordinateur ;
le signalement du premier identifiant d'ordinateur en réponse à la détermination que la première transaction en ligne est éventuellement une transaction frauduleuse ;
la comparaison, à l'aide du processeur, du premier identifiant d'ordinateur et du deuxième identifiant d'ordinateur ;
la détermination, à l'aide du processeur, qu'une différence mesurée entre le paramètre d'écart horaire du premier identifiant d'ordinateur et le paramètre d'écart horaire du deuxième identifiant d'ordinateur s'inscrit dans une plage sélectionnée ; et
l'indication, à l'entreprise de commerce électronique, que l'ordinateur a été utilisé dans la première transaction en ligne et la deuxième transaction en ligne, sur la base au moins de la détermination que la différence mesurée s'inscrit dans la plage sélectionnée.

2. Procédé selon la revendication 1, comprenant en outre l'étape suivante :
l'obtention, à partir des informations sélectionnées, de paramètres d'identification additionnels comportant des informations d'identification personnelles.

3. Procédé selon la revendication 2, dans lequel les informations d'identification personnelles comportent des informations d'identification de consommateur.

4. Procédé selon la revendication 3, dans lequel les informations d'identification de consommateur comportent au moins un élément dans le groupe constitué par : un nom, une adresse, des informations de facturation, des informations d'expédition, un numéro de téléphone et une adresse courriel de consommateur.

5. Procédé selon la revendication 1, dans lequel le paramètre d'identification non personnel consiste en des informations d'identification d'ordinateur.

6. Procédé selon la revendication 5, dans lequel les informations d'identification d'ordinateur comportent un paramètre Internet.

7. Procédé selon la revendication 6, dans lequel le paramètre Internet consiste en un paramètre CGI.

8. Procédé selon la revendication 7, dans lequel le paramètre CGI comporte : une adresse IP et/ou une identité de navigateur.

9. Procédé selon la revendication 1, comprenant en outre l'étape suivante :
la capture, à partir des informations sélectionnées concernant l'ordinateur, d'informations sur un fuseau horaire pertinent dans lequel se situe physiquement l'ordinateur.

10. Procédé selon la revendication 9, dans lequel les informations sur le fuseau horaire pertinent sont utilisées pour une ou plusieurs dates ultérieures pour indiquer si l'heure d'été s'applique dans le fuseau horaire pertinent.

11. Support lisible par ordinateur contenant des instructions de programme permettant la mise en oeuvre de toutes les étapes de la revendication 1.

12. Procédé selon la revendication 1, dans lequel le paramètre d'écart horaire pour les premier et deuxième identifiants d'ordinateur consistent chacun en une durée de propagation mesurée depuis l'ordinateur jusqu'à un serveur de site Web selon un paquet de données horodaté qui est transmis au cours respectivement de la première transaction en ligne et de la deuxième transaction en ligne.

13. Procédé selon la revendication 1, dans lequel le paramètre d'écart horaire est mesuré sur un intervalle de temps d'une heure mesurée entre le moment où un premier paquet de données horodaté et un deuxième paquet de données horodaté sont envoyés par l'ordinateur, et dans lequel chacun comporte des informations d'horodatage TCP.

14. Procédé selon la revendication 1, dans lequel le paramètre d'écart horaire consiste en un décalage d'horloge pour l'ordinateur.

15. Support lisible par ordinateur selon la revendication 11, comprenant un programme d'ordinateur configuré en outre pour mettre en oeuvre les étapes additionnelles selon la revendication 12 pour identifier un ordinateur.

16. Système de détection de transactions potentiellement frauduleuses, comprenant :
un ordinateur client (12) ; et
un serveur Web commerçant (14),
le serveur Web commerçant comprenant une horloge et étant conçu, pour chacune d'une première et d'une deuxième transaction en ligne :
pour capturer l'heure locale de l'ordinateur client ;
pour recevoir des informations client non personnelles ;
pour calculer un écart horaire entre l'heure locale de l'ordinateur client et l'horloge du serveur ; et
pour générer un identifiant d'ordinateur pour identifier l'ordinateur client, lequel est dérivé de l'écart de temps en association avec les informations client non personnelles ;
pour ainsi fournir un premier identifiant d'ordinateur pour un ordinateur client mis en jeu dans la première transaction en ligne et un deuxième identifiant d'ordinateur pour un ordinateur client mis en jeu dans la deuxième transaction en ligne ;
le serveur Web commerçant étant configuré en outre pour :
signaler le premier identifiant d'ordinateur en réponse à la détermination que la première transaction en ligne est éventuellement une transaction frauduleuse ;
comparer le premier identifiant d'ordinateur et le deuxième identifiant d'ordinateur ;
déterminer qu'une différence mesurée entre l'écart horaire du premier identifiant d'ordinateur et l'écart horaire du deuxième identifiant d'ordinateur s'inscrit dans une plage sélectionnée ; et
indiquer que l'ordinateur client a été utilisé dans la première transaction en ligne et la deuxième transaction en ligne, sur la base au moins de la détermination que la différence mesurée s'inscrit dans la plage sélectionnée.

17. Système ordinateur configuré comme le serveur Web commerçant de la revendication 16.
